# EUROPEAN PATENT APPLICATION

(11) **EP 2 738 679 A1**
(43) Date of publication of application: **04.06.2014**
(21) Application number: 12869359.5
(22) Date of filing: 24.02.2012
(51) Int. Cl.: G06F 11/30, G06F 11/34

(54) **COMPUTER PROGRAM AND MANAGEMENT COMPUTER**

(71) Applicant: Hitachi, Ltd., Tokyo 100-8280 (JP)
(72) Inventor: NAGAI Takayuki, Tokyo 100-8280 (JP); NAGURA Masataka, Tokyo 100-8280 (JP); MURASE Kaori, Tokyo 100-8280 (JP)
(74) Representative: Moore, Graeme Patrick
(86) International application number: PCT/JP2012/054618
(87) International publication number: WO 2013/125037

(57) **Abstract**

To analyze an event of high importance as quick as possible with a possible small memory size.

A management server (A) detects an event related to a problem that has occurred in a predetermined management object, (B) determines, when a plurality of the events are detected, an event importance of each of the plurality of events, (C) executes an on-demand expansion for generating, in the causality information, a predetermined causality, based on a topology and an event propagation model in descending order from the event determined in (B) as having a highest event importance, (D) records that the detected event has occurred relative to the predetermined causality, and (E) analyzes the detected event by using the predetermined causality.

## Description

### [Technical Field]

The present invention relates to a computer program and a management computer.

### [Background Art]

Patent Literature 1 discloses a management server for determining the cause of a problem that has occurred in a management target component of a computer system. The management program of Patent Literature 1 creates an event of the various failures in the management target device and accumulates information in an event database.

Moreover, this management program includes an analytical engine for analyzing the causal association of a plurality of failure events that have occurred in the management target device. The analytical engine accesses a configuration database including inventory information of the management target device, and recognizes the components in the management target device, which are located on a path on the I/O (Input/Output) route, as a single group referred to as a "topology".

In addition, the analytical engine applies to the topology a failure propagation model (IF-THEN format rule) comprising predetermined conditional statements and analysis results, and thereby creates a causality matrix. A causality matrix includes a cause event, which is the cause of the failure in other devices, and a related event group which is triggered thereby. The event that is indicated as the root cause of the failure in the THEN unit of the failure propagation model is the cause event, and those other than the cause event among the events indicated in the IF unit are the related events.

### [Citation List]

### [Patent Literature]

[PTL 1] U.S. Patent No. 7107185

### [Technical Problem]

With the conventional technology described in Patent Literature 1, the causalities are created before the occurrence of events based on all management target devices and all event propagation models. Thus, with the conventional technology, the size of the rule memory for storing the causalities will increase upon analyzing a complex computer system which is of a large scale or which requires numerous causalities. Accordingly, the conventional technology heavily consumes the storage resource (for instance, memory or secondary storage device) of the management computer.

### [Summary of Invention]

The present invention was devised in view of the foregoing problems, and an object of this invention is to provide a computer program and a management computer capable of efficiently using the storage resource and also capable of analyzing the cause relatively quickly.

### [Solution to Problem]

The computer program according to one aspect of the present invention is a computer program for causing a computer to function as a management computer for managing a computer system comprising a plurality of management target devices, wherein the computer program can use a storage resource storing predetermined information, the predetermined information includes: (1) a topology showing a relationship of a plurality of management objects in relation to the plurality of management objects which are the plurality of management target devices or a plurality of components included in the plurality of management target devices; (2) an event propagation model showing that, caused by a first event of a predetermined type which occurs in a management object of a first type, a second event of another predetermined type occurs in a management object of a second type; and (3) causality information including one or more causalities, the causality shows that, caused by the first event of a predetermined type which occurs in a first management object of a first type, the second event of another predetermined type occurs in a second management object of a second type, and the computer program causes the computer to: (A) detect an event related to a problem that has occurred in a predetermined management object; (B) determine, when a plurality of the events are detected, an event importance of each of the plurality of events; (C) execute an on-demand expansion for generating, in the causality information, a predetermined causality based on the topology and the event propagation model in descending order from the event determined in (B) as having a highest event importance; (D) record that the detected event has occurred relative to the predetermined causality; and (E) analyze the detected event by using the predetermined causality.

### [Brief Description of Drawings]

[Fig. 1]

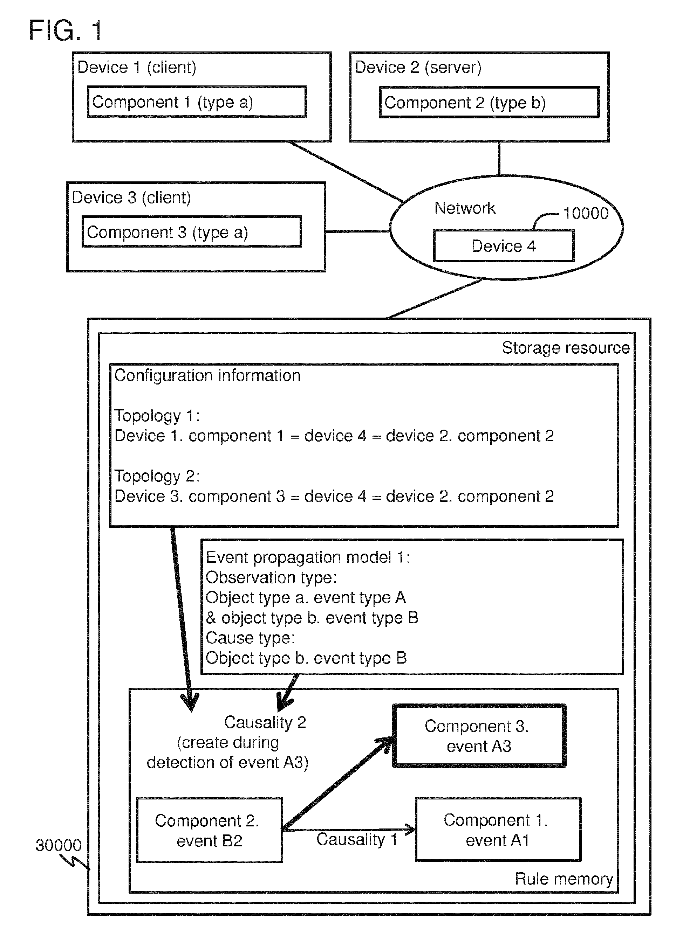

   Fig. 1 is a schematic diagram explaining the outline of an embodiment of the present invention.
[Fig. 2]

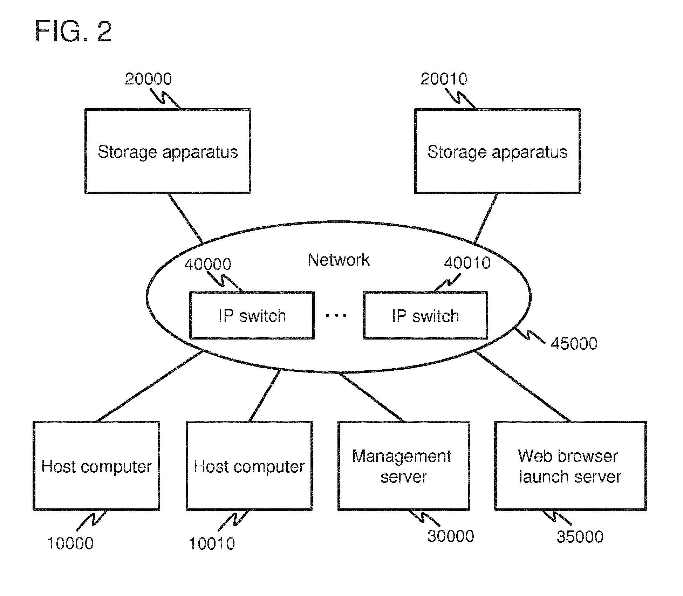

   Fig. 2 is a diagram showing a physical configuration example of the computer system.
[Fig. 3]

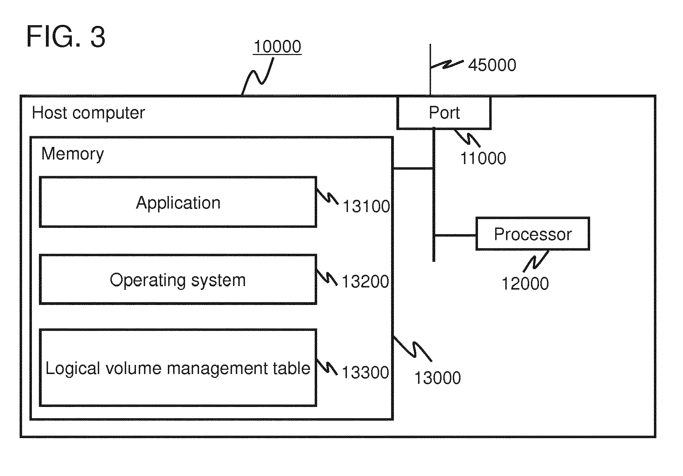

   Fig. 3 is a diagram showing a configuration example of the host computer.
[Fig. 4]

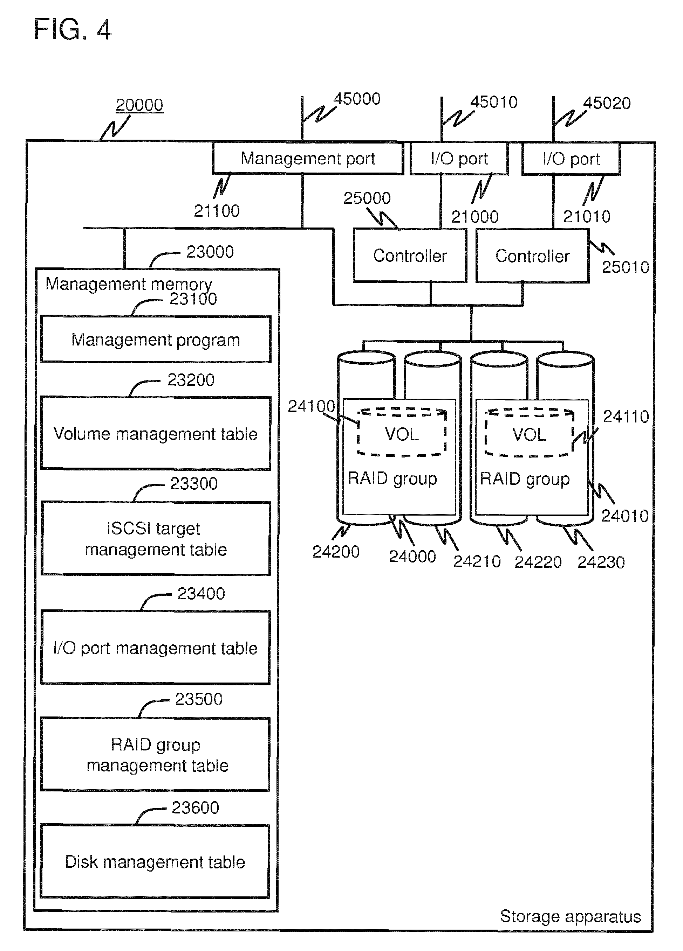

   Fig. 4 is a diagram showing a configuration example of the storage apparatus.
[Fig. 5]

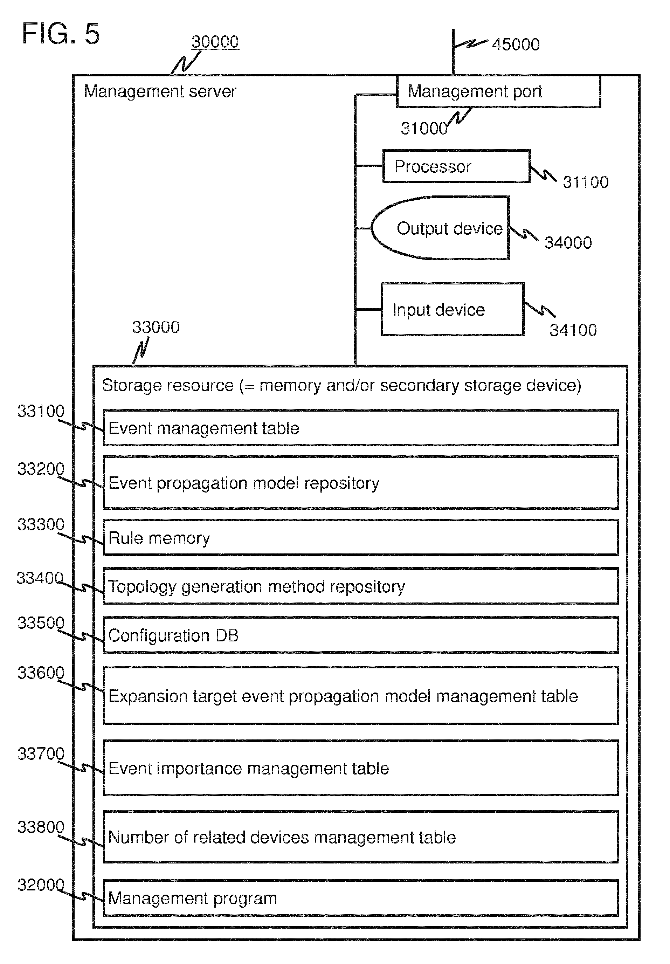

   Fig. 5 is a diagram showing a configuration example of the management server.
[Fig. 6]

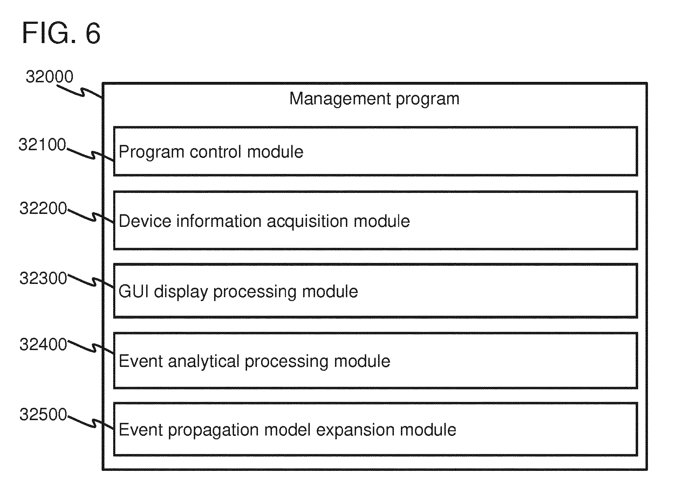

   Fig. 6 is a diagram showing a logical configuration example of the management program.
[Fig. 7]

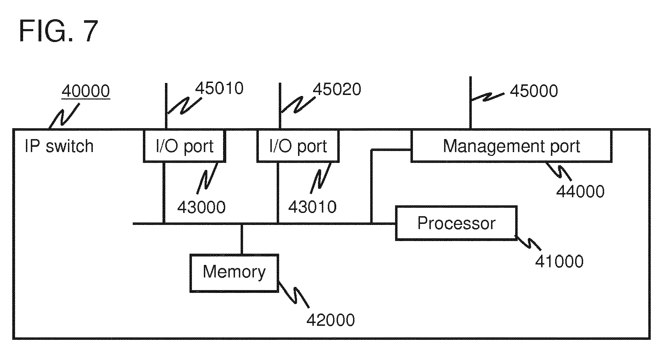

   Fig. 7 is a diagram showing a configuration example of the IP switch.
[Fig. 8A]

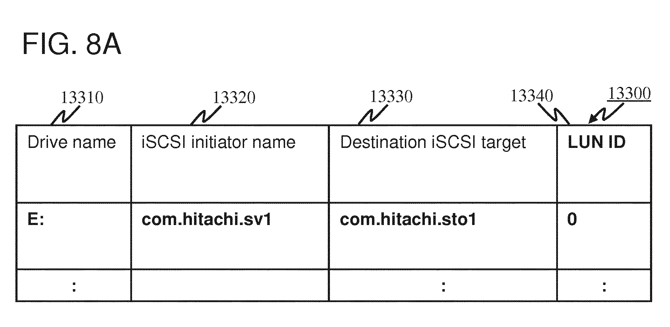

   Fig. 8A is a diagram showing a configuration example of the logical volume management table included in the host computer.
[Fig. 8B]

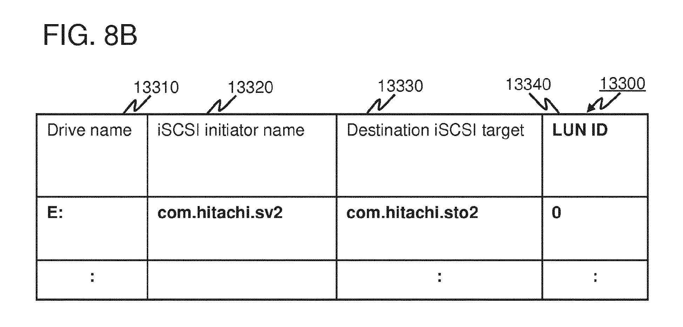

   Fig. 8B is a diagram showing another example of the logical volume management table.
[Fig. 8C]

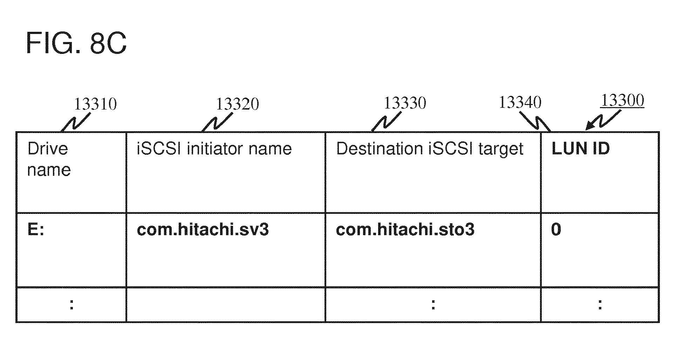

   Fig. 8C is a diagram showing yet another example of the logical volume management table.
[Fig. 9]

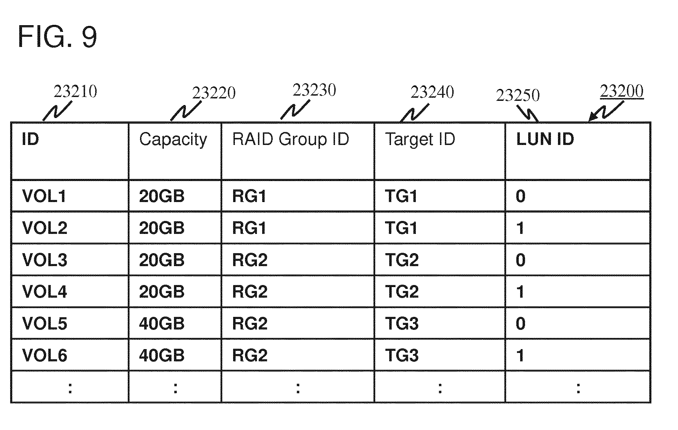

   Fig. 9 is a diagram showing a configuration example of the volume management table included in the storage apparatus.
[Fig. 10]

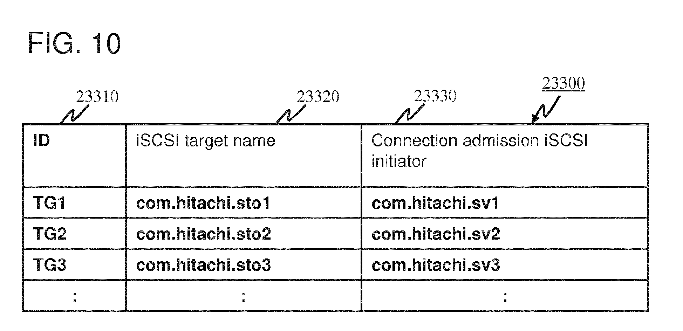

   Fig. 10 is a diagram showing a configuration example of the iSCSI target management table included in the storage apparatus.
[Fig. 11]

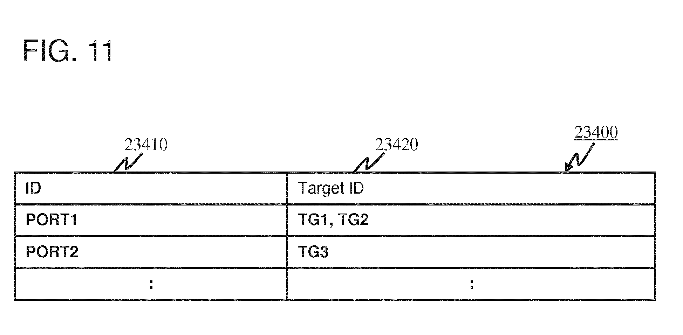

   Fig. 11 is a diagram showing a configuration example of the I/O port management table included in the storage apparatus.
[Fig. 12]

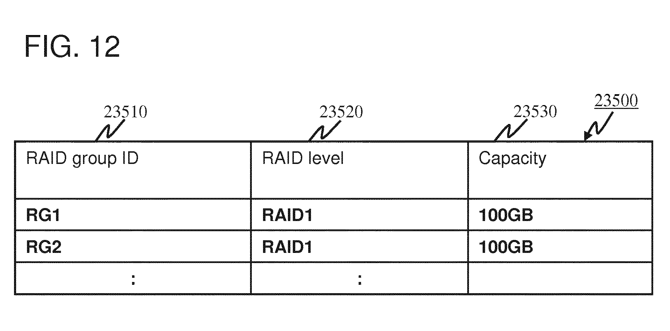

   Fig. 12 is a diagram showing a configuration example of the RAID group management table included in the storage apparatus.
[Fig. 13A]

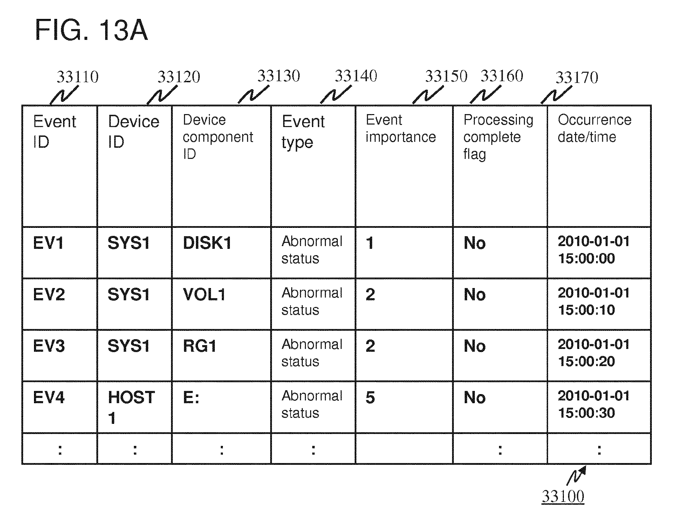

   Fig. 13A is a diagram showing a configuration example of the event management table included in the management server.
[Fig. 13B]

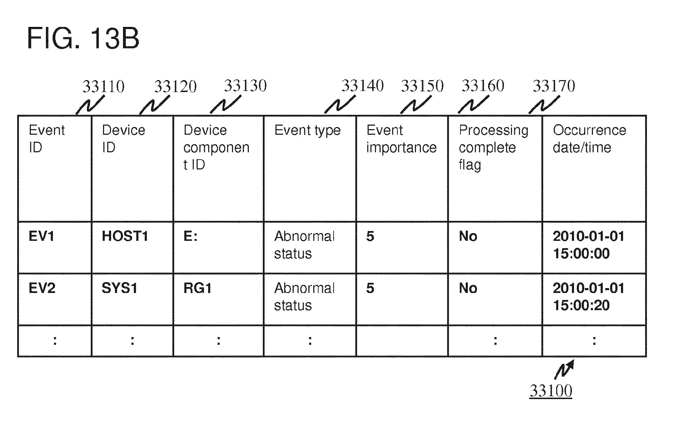

   Fig. 13B is a diagram showing another example of the event management table included in the management server.
[Fig. 14A]

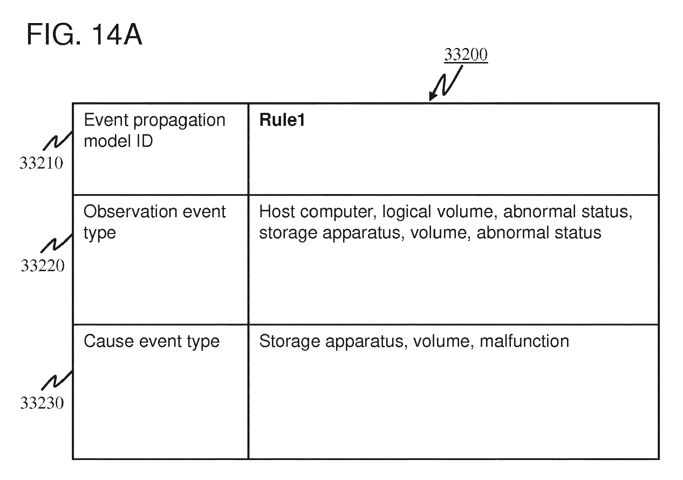

   Fig. 14A is a diagram showing a configuration example of the event propagation model included in the management server.
[Fig. 14B]

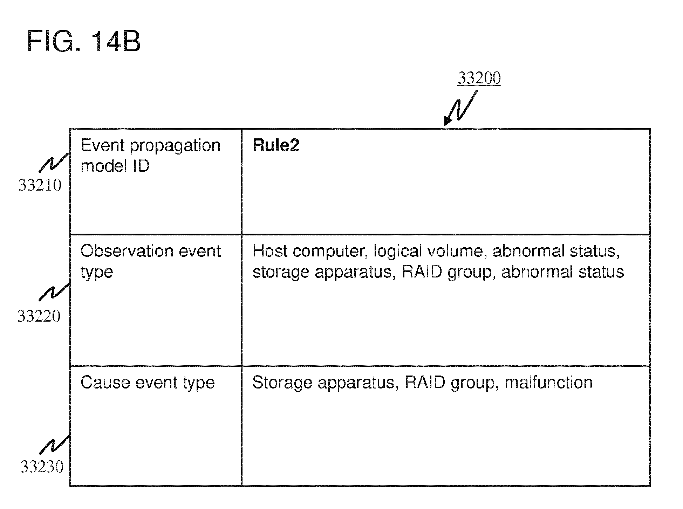

   Fig. 14B is a diagram showing another example of the event propagation model.
[Fig. 15A]

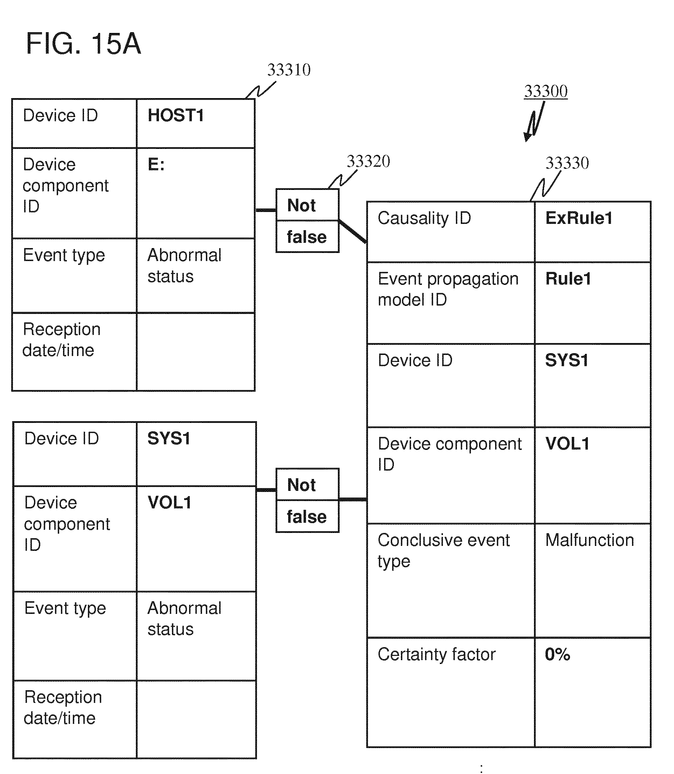

   Fig. 15A is a diagram showing a configuration example of the rule memory included in the management server.
[Fig. 15B]

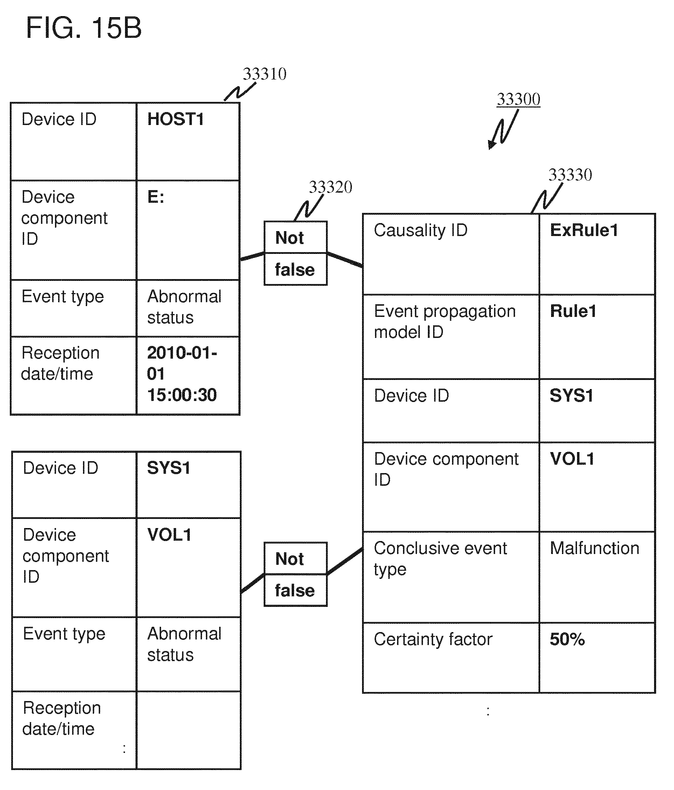

   Fig. 15B is a diagram showing another example of the rule memory.
[Fig. 15C]

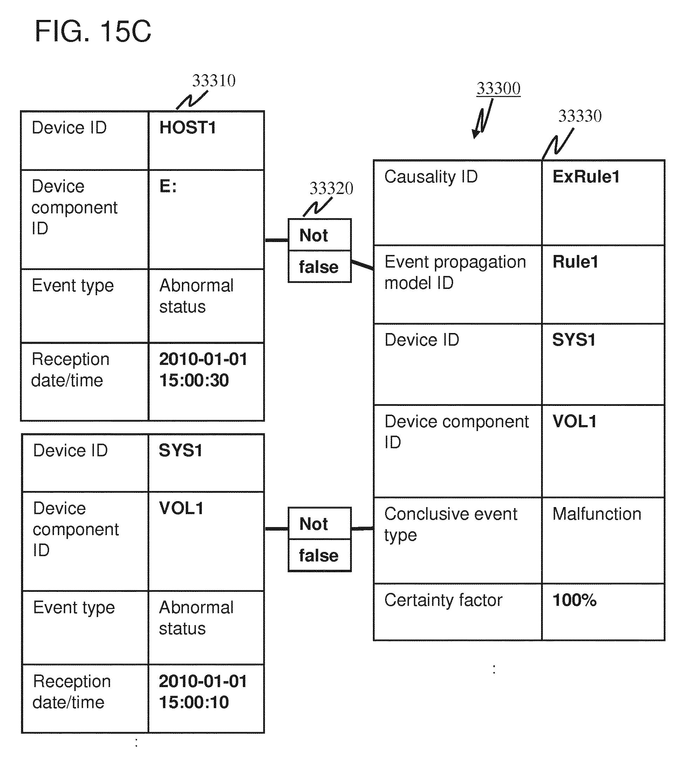

   Fig. 15C is a diagram showing yet another example of the rule memory.
[Fig. 15D]

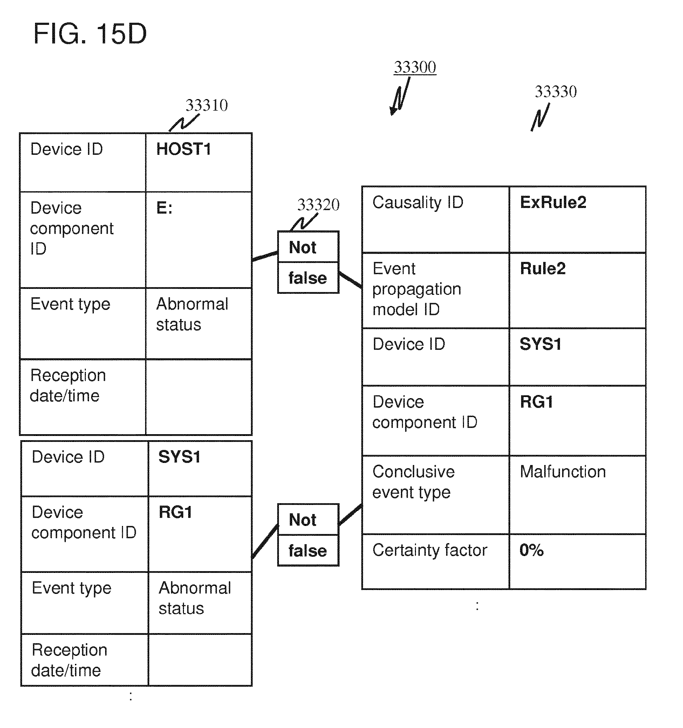

   Fig. 15D is a diagram showing yet another example of the rule memory.
[Fig. 15E]

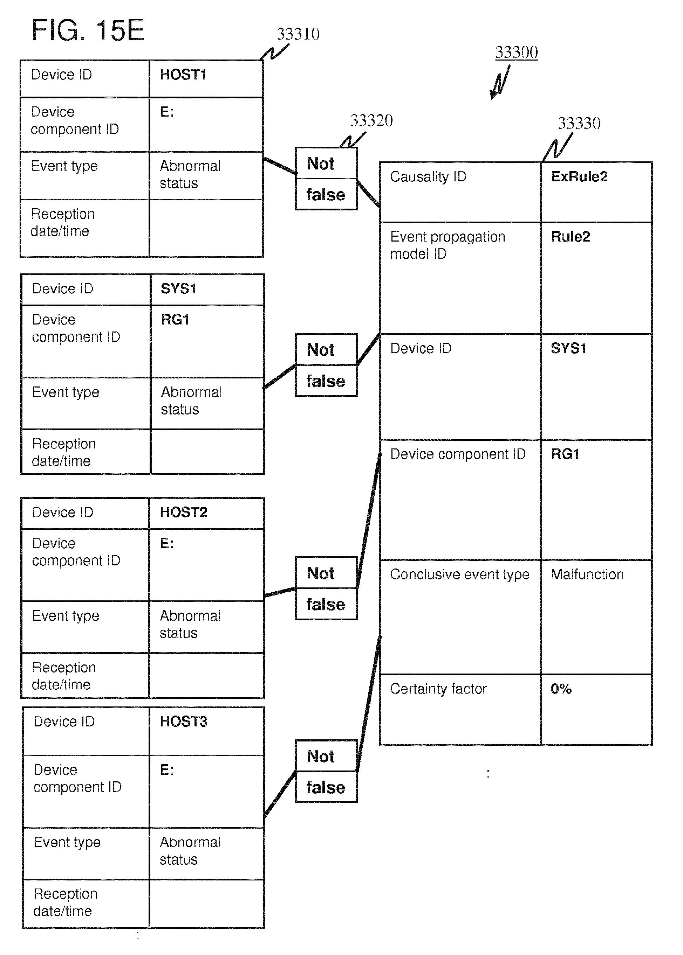

   Fig. 15E is a diagram showing yet another example of the rule memory.
[Fig. 16A]

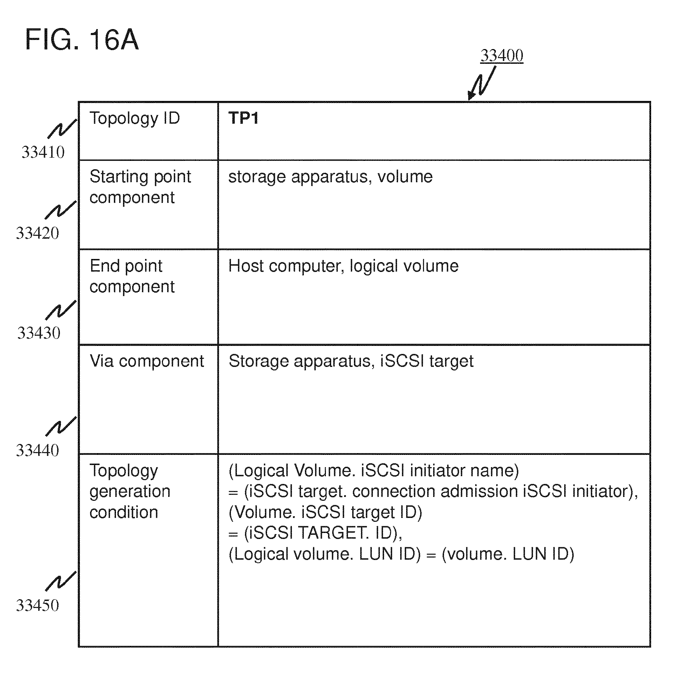

   Fig. 16A is a diagram showing a configuration example of the topology generation mode included in the management server.
[Fig. 16B]

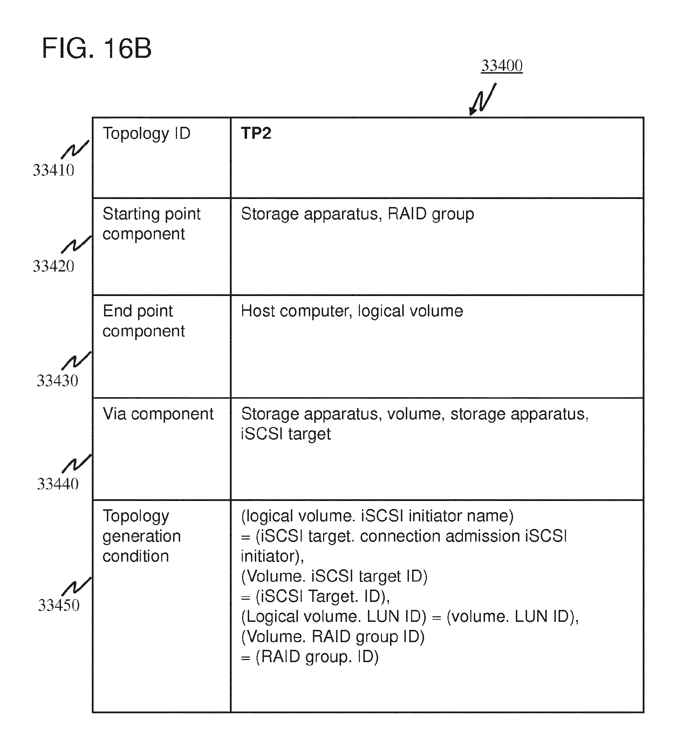

   Fig. 16B is a diagram showing another example of the topology generation mode included in the management server.
[Fig. 17]

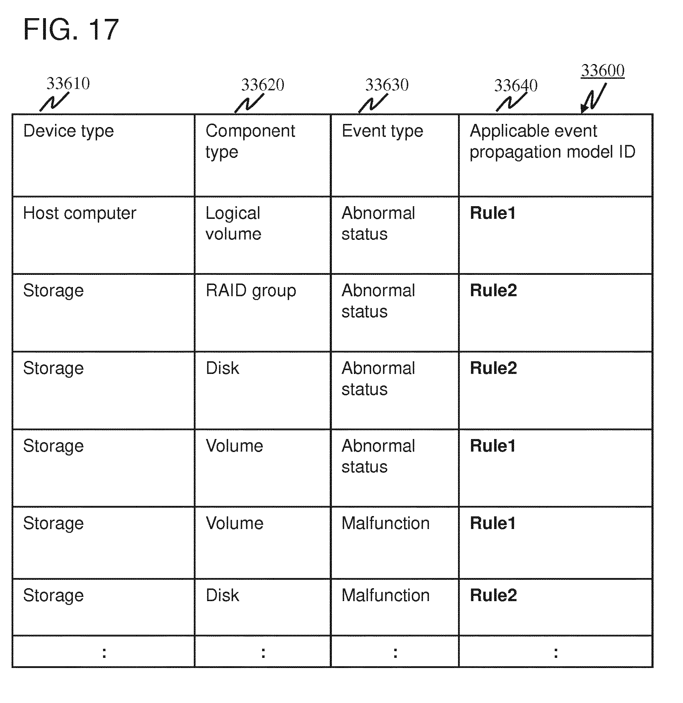

   Fig. 17 is a diagram showing a configuration example of the expansion target event propagation model management table included in the management server.
[Fig. 18]

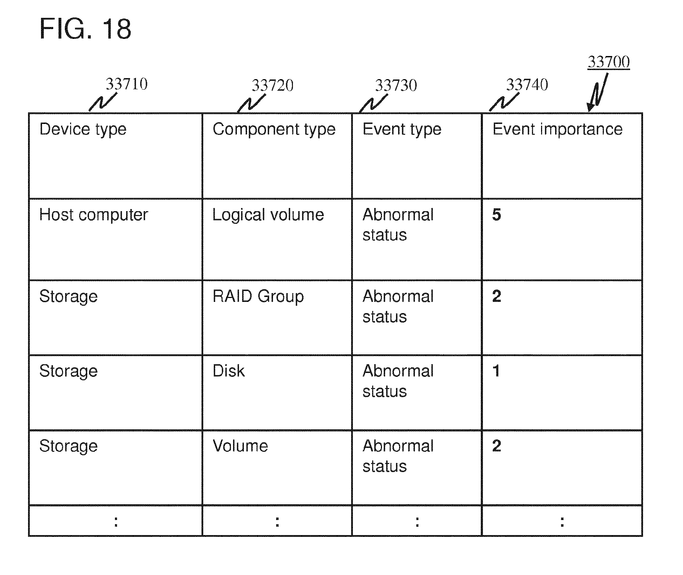

   Fig. 18 is a diagram showing a configuration example of the event importance management table included in the management server.
[Fig. 19]

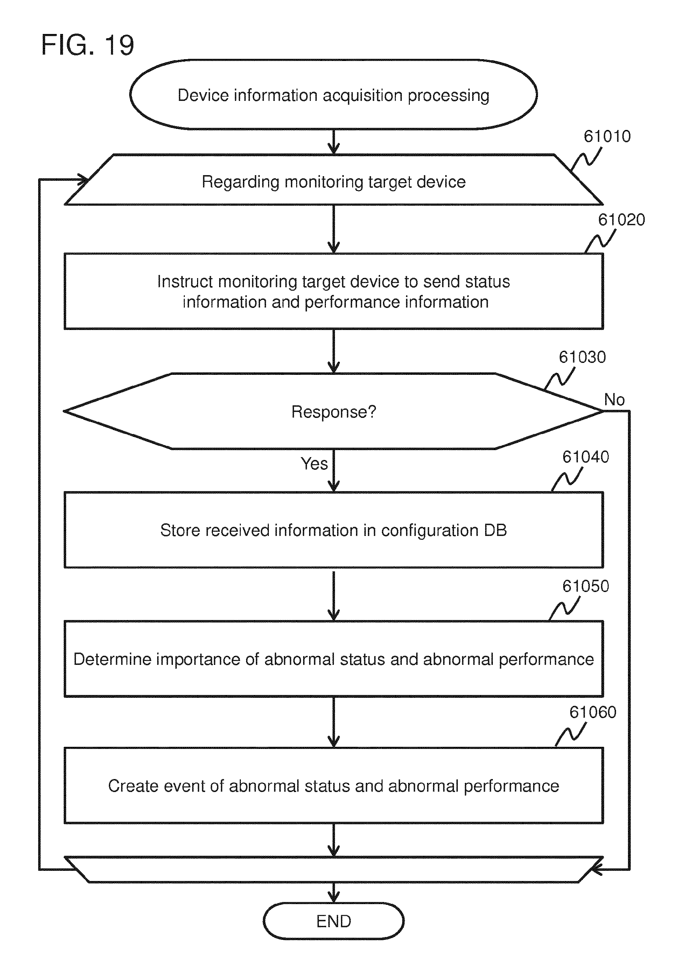

   Fig. 19 is a flowchart of the device information acquisition processing to be executed by the management server.
[Fig. 20]

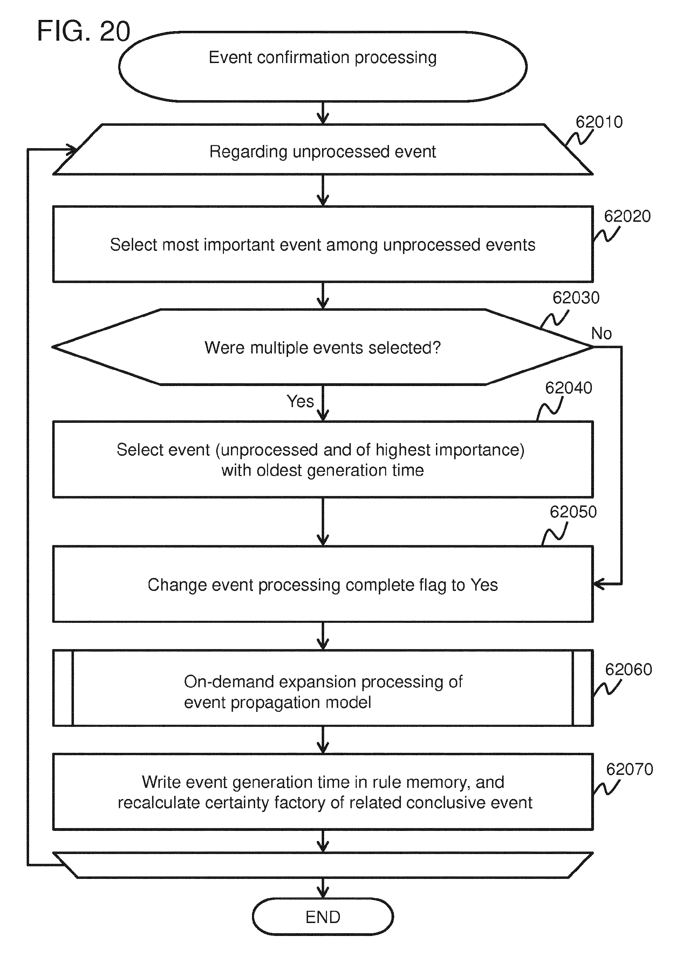

   Fig. 20 is a flowchart of the event confirmation processing to be executed by the management server.
[Fig. 21]

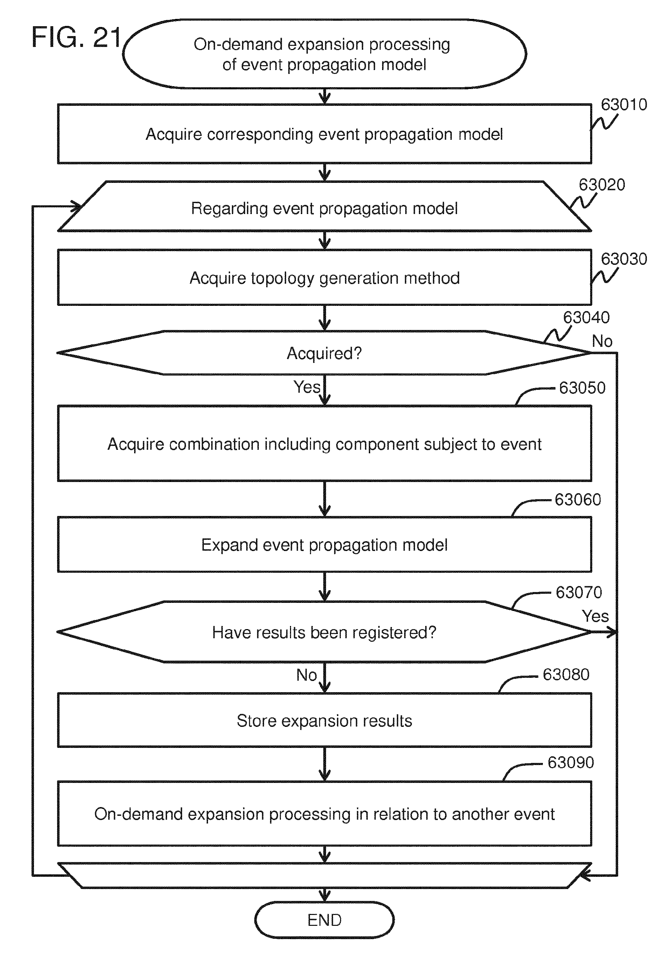

   Fig. 21 is a flowchart of the event propagation model on-demand expansion processing to be executed by the management server.
[Fig. 22A]

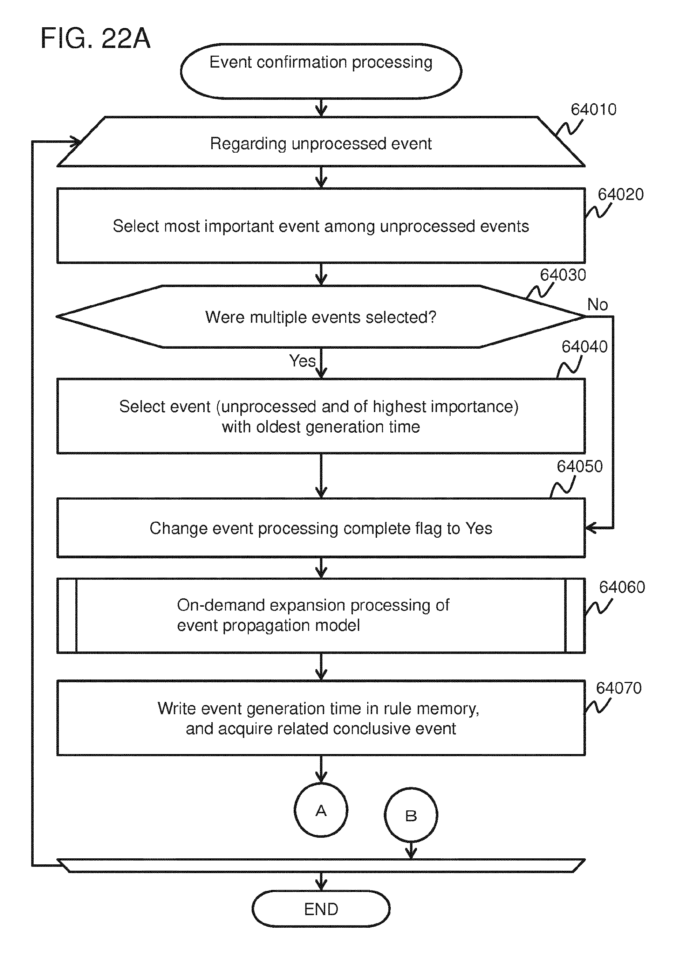

   Fig. 22A is a flowchart of the event propagation model on-demand expansion processing to be executed by the management server in Example 2.
[Fig. 22B]

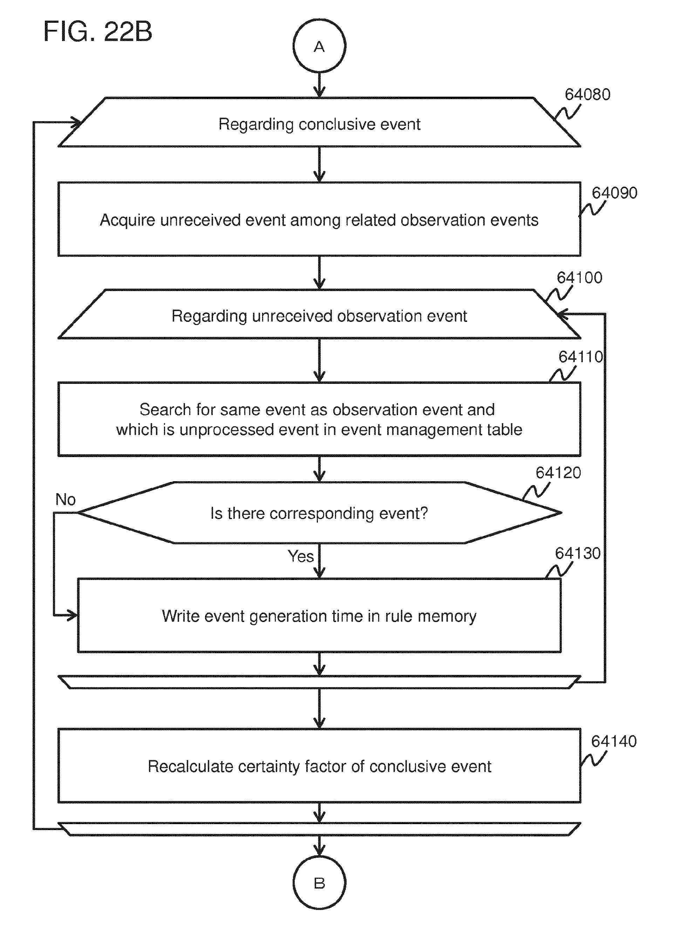

   Fig. 22B is a flowchart that follows Fig. 22A.
[Fig. 23]

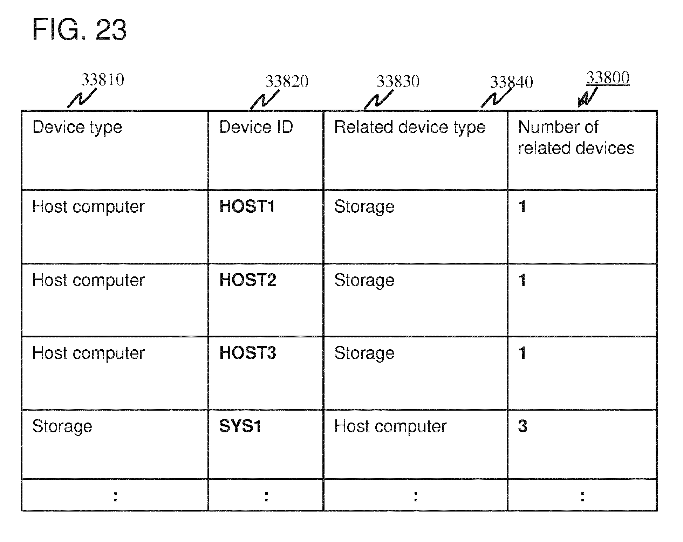

   Fig. 23 is a configuration example of the number of related instruments-management table included in the management server in Example 3.
[Fig. 24]

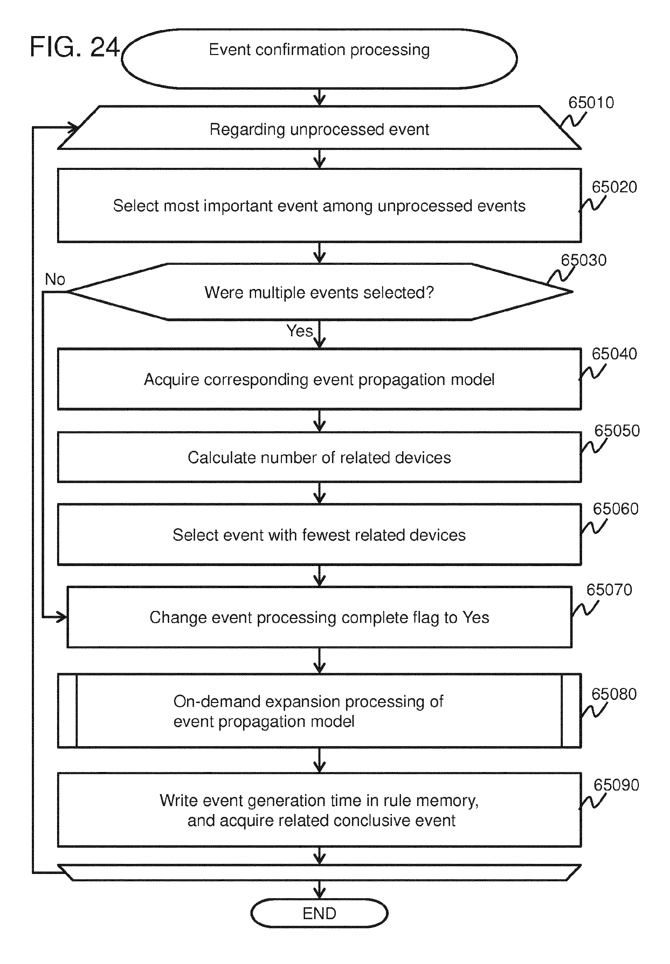

   Fig. 24 is a flowchart of the event propagation model on-demand expansion processing to be executed by the management server in Example 3.
[Fig. 25]

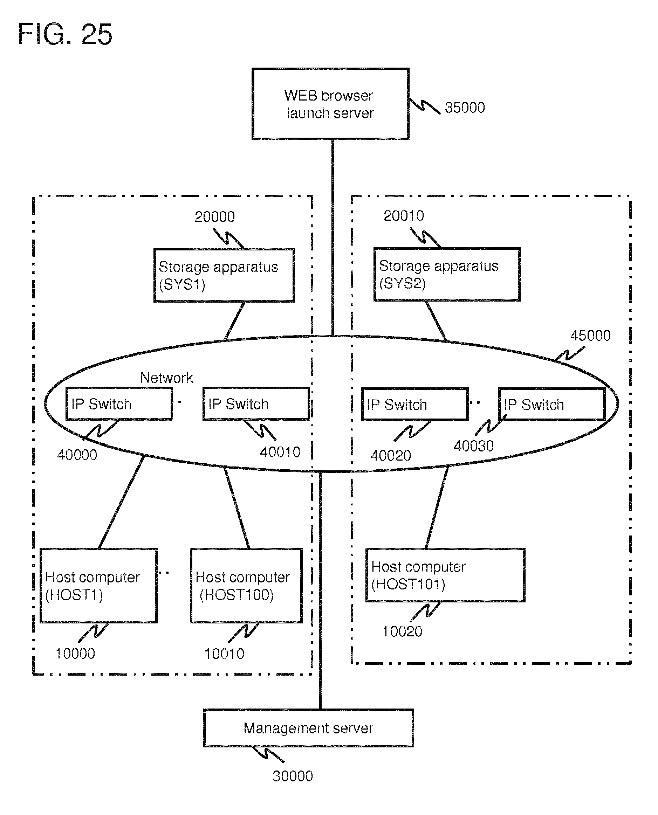

   Fig. 25 is a diagram showing a physical configuration example of the computer system.
[Fig. 26]

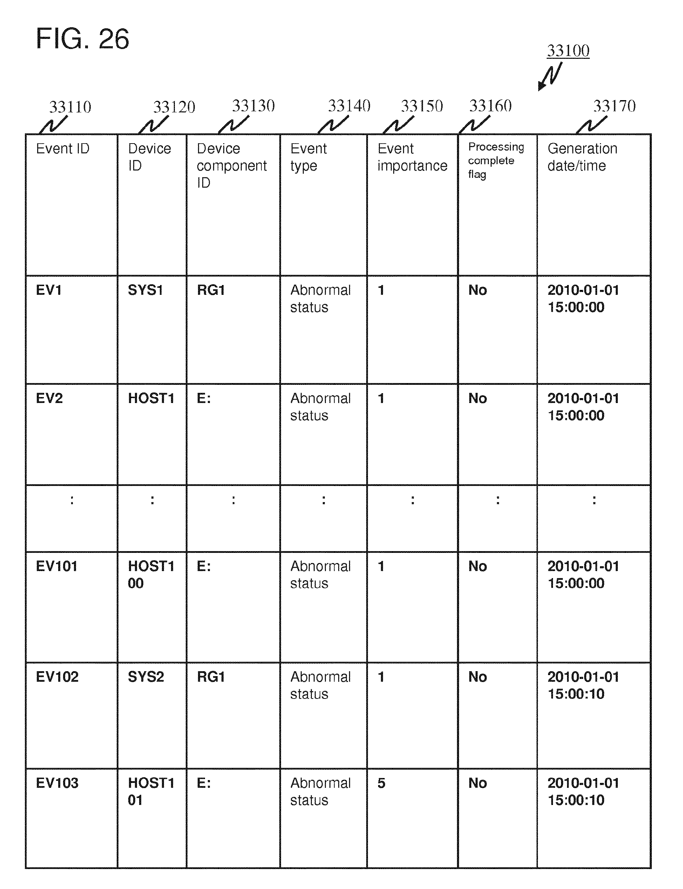

   Fig. 26 is a diagram showing a configuration example of the event management table included in the management server.

### [Description of Embodiments]

Embodiments of the present invention are now explained with reference to the drawings. Note that, in the ensuing explanation, information of the embodiments is sometimes explained in the form of "aaa table", "aaa list", "aaa DB", "aaa queue", "aaa matrix" or the like, but such information may also be expressed according to a data structure other than a table, a list, a DB, a queue, a matrix or the like. Thus, in order to show that the information is not dependent on a data structure, "aaa table", "aaa list", "aaa DB", "aaa queue", "aaa repository", "aaa matrix" or the like is sometimes referred to as "aaa information". In addition, while "identifying information", "identifier", "name", "appellation", "ID" and other expressions are used upon explaining the subject matter of each piece of information, these expressions are mutually interchangeable. Moreover, while the expression of "information" is used to show the data contents, other expressions may also be used. Note that the term "repository" is used in the explanation of the embodiments, but "repository" is synonymous with "information".

In the ensuing explanation, there are cases where the explanation is made with the term "program" as the subject. However, since a program performs predetermined processing by using a memory and a communication port (communication controller) as a result of being executed by a processor, the explanation may also be made by taking the term "processor" as the subject. Moreover, the processing that is disclosed by using the term "program" as the subject may also be processing to be performed by a computer such as a management server or a storage system, or an information processing apparatus. Moreover, a part of or the entire program may be realized with dedicated hardware. Moreover, the various programs may be installed in the respective computers via a program distribution server or a computer-readable storage medium.

The management computer of this embodiment stores, in a storage area of a memory or the like, a topology of the computer system, an event propagation model, and causality information including one or more causalities. Triggered by the analysis or detection of an event by the management computer, the management computer creates a causality based on the topology and the event propagation model.

When the management computer simultaneously detects a plurality of events, the management computer creates the causalities in descending order from the event of highest importance. The created causalities are stored as a part of the causality information. In this embodiment, the rule memory is an example of the causality information.

In this embodiment, upon the detection or analysis of an event, a causality is created and stored to the extent required for analyzing that event. Accordingly, it is possible to minimize the size of causality information, and efficiently use the storage resource. In addition, according to this embodiment, when simultaneously analyzing a plurality of failure events, it is possible to promptly obtain the analysis result of an event (failure) of high importance.

Fig. 1 is a diagram showing the outline of this embodiment. The management server 30000 is a computer for managing a plurality of management target devices in a computer system. In the diagram, the management target device is abbreviated as a "device".

As the types of management target devices, there are, for example, a host computer (server), a network device such as an IP switch or a router, a NAS (Network Attached Storage), a storage apparatus, or the like.

In this embodiment, the logical or physical constituents such as the devices included in the management target device are referred to as "components". As examples of such components, there are, for example, a communication port, a microprocessor, a storage resource, a storage device, a computer program, a virtual machine, a logical volume, a RAID group (defined internally by the storage apparatus), or the like. Note that, when the management target device and the components are to be treated without differentiation, they are collectively referred to as "management objects".

The management server 30000 acquires device information from the management target devices, and displays management information of the management target devices based on the acquired device information. The device information may include, for example, configuration information showing the configuration of the management target devices, failure information regarding the failures that have occurred in the management target devices, performance information of the management target devices, and so on. The management information of the management target devices includes, for example, configuration information of the management target devices, information showing the occurrence/non-occurrence of failures, information showing the performance value, and so on.

Note that several of the management target devices are servers of some type of network service (for instance, iSCSI, file sharing service, DNS, or other Web services). Several of the other management target devices use, as clients, the network services provided by these servers.

In the foregoing case, when a problem related to the provision of service (for instance, failure or performance failure of the management object) occurs in the management target device which is a server (this is sometimes referred to as a "server device"), a problem related to the management object also occurs in the client management target device (this is sometimes referred to as a "client device") that is using that service.

Note that, in the ensuing explanation, information for showing the problem, which occurred in the management object, in the management server is referred to as an "event". Moreover, "detection of an event" refers to "detecting the occurrence of a problem and creating event information". Note that "occurrence of an event" is synonymous with "occurrence of a problem".

The management server 30000 can analyze whether the cause of a problem that has occurred in a certain management target device is a problem that has occurred in another management target device, and display the analysis result thereof. Thus, the management server 30000 stores the following information, and uses such information upon performing the analysis.

### (Information 1) Configuration information

Configuration information stores information showing the configuration of the management target device. The configuration of the management target device is also referred to as an inventory. The configuration information includes the components included in the management target device, and a correspondence relationship between the management objects, which is like the correspondence relationship between the components.

The configuration information includes identifying information of the server device (or components of the server device) for receiving the network service in relation to the client device. For example, explained is a case where the provision of an LU (Logical Unit) by the iSCSI protocol described later is a network service. Here, the iSCSI target name and LUN (Logical Unit Number) are designated as the identifying information. The client device accesses the LU provided by the storage apparatus based on the identifying information. When the network service is a Web service, the URL (Uniform Resource Locator) of the Web server is designated as the identifying information. The client device accesses the Web page based on the URL.

The configuration information sometimes includes, in relation to the server device, identifying information related to the client device to become the access source. The relationship between a plurality of management objects in the management target device or across a plurality of management target devices is referred to as a "topology".

### (Information 2) Information of event propagation model

Information of the event propagation model (hereinafter simply referred to as the "event propagation model") includes one or more observation type pairs and one or more cause type pairs. The details of these type pairs are described below.

### (2A) Cause type pair

A cause type pair is a pair of the type of management object (sometimes also referred to as a "management object cause type"), and the type of event (event cause type). The event cause type is the type of event that may occur in the management object of the type set forth in the management object cause type.

### (2B) Observation type pair

The observation type pair is a pair of the type of management object (sometimes also referred to as a "management object observation type"), and the type of event (event observation type). The event observation type is the type of event that may occur in the management object of the type set forth in the management object observation type. The observation type pair shows the type of event that will consequently occur when an event set forth in the type of the cause type pair occurs.

Note that, when all events of an observation type pair included in a certain event propagation model are detected, while it is preferable that the occurrence of an event of the corresponding cause type pair is the cause, this is not a necessity.

In the analytical processing performed by the management server 30000, more specifically, a causality is created in the causality information based on the event propagation model and the topology. The analytical processing performed by the management server 30000 analyzes an event by using the causality information.

A causality is information showing that, when a first event occurs in a first management object, a second event occurs in a second management object. The condition for concluding that the first event is the cause is desirably the detection of all second events related to the first event. However, this is not a requirement. So as long as the causality information is able to show the foregoing subject matter, the causality information may also be in the form of a causality matrix. Otherwise, the causality information may also be a data structure which takes advantage of pointer information showing the relationship, and shows the relationship of the first event and the second event.

The management server 30000 creates the event correlation information on demand. In other words, the management server 30000 determines whether the event correlation information corresponding to a predetermined event, in which the existence thereof was detected but has not yet been analyzed, has been created in an event repository. When the event correlation information has not yet been created, the management server 30000 uses the topology to which the predetermined event is related and the event propagation event to which the predetermined event is related to create the event correlation information, and analyzes the predetermined event.

As examples of event analysis, the following may be considered.

(Analysis example 1) In event analysis example 1, identified is an event 2 to become the cause of a certain event 1 that was detected. This identification processing can be performed by referring to the causality information. The management server (or the management system described later) may display on its own display device, in addition to the information of the event 1, a message to the effect that the event 1 occurred with the event 2 as the cause thereof.

(Analysis example 2) In event analysis example 2, identified is an event 4 which occurs (or may occur) with a certain event 3 that was detected as the cause. This identification processing can be performed by referring to the causality information. The management server (or the management system) may display on its own display device, a message to the effect that the event 4 occurs (or may occur) with the occurrence of the event 3 as the cause thereof.

After detecting an event, the management server 30000 creates a predetermined causality in the causality information based on (1) the event propagation model in which that detected event is included in the observation type pair or the cause type pair, and (2) the topology related to the component in which that detected event had occurred. The creation of a predetermined causality in the causality information is also referred to as the "expansion of causality" in the ensuing explanation.

Note that the expansion of causality triggered by the foregoing event detection is referred to as an "on-demand expansion". Based on this on-demand expansion, the size of causality information can be reduced even in the event analysis of large-scale computer systems or complex computer systems.

When the management server 30000 detects a plurality of events, the causality expansion processing is performed in descending order from the event of highest importance assigned to the event. Consequently, it is possible to inhibit delays in the analysis of failures of high importance even if the computer system managed by the management server 30000 becomes large-scale, or the number of failures detected by the management server 30000 per unit time increases.

As indices for defining the importance of events, there are the following examples. (Index example 1) Importance that is assigned in advance for each type of management object or each type of event. (Index example 2) Importance of the equipment that was subject to failure or importance of the business that was subject to failure. (Index example 3) In the case of a performance failure, deviance of measurement value from a threshold or a baseline.

While the foregoing examples may be considered as the indices for defining the importance of events, other indices may also be used. Moreover, upon determining the order of performing the event expansion processing, the time that the event was detected may be, or may not be, considered.

Subsequently, the management server 30000 refers to the causality information including the detected event, and checks whether some events among the observation type pairs defined in the causality information have actually occurred. In addition, the management server 30000 calculates the ratio of the events that actually occurred among the defined observation type pairs as a "certainty factor" (certainty factor = number of events that actually occurred/number of defined observation type pairs). The certainty factor may be an index showing the probability of the cause type pair defined in the causality information.

When a long period of time elapses from the start of analysis, the tendency is that various types of events are detected from various types of management objects. Thus, the management server 30000 may assign a valid period to an event, and exclude an event in which the valid period had lapsed from the target of analysis. It is thereby possible to alleviate the occurrence of noise in the analysis result, which is caused by events that are considerably separated in terms of chronological order being targets of analysis.

As shown in the lower part of Fig. 1, an event correlation 1 which shows that the cause of an event A1 (type A) which occurred in a component 1 (type a) is an event B2 (type B) which occurred in a component 2 (type b) has already been created. Fig. 1 shows the outline where, under a situation where the event correlation 1 has already been created, an event A3 (type A) in a component 3 (type a) is actually detected.

Note that the event correlation 1 was created via so-called on-demand based on the topology 1 and the event propagation model 1 with the past detection of the event A1 as the trigger. So as long as the rule memory has free space, and so as long as the configuration of the management target object is not changed, an event correlation created in the past will be stored.

When the event A3 (type A) in the component 3 (type a) is detected under a situation where the event correlation 1 has already been created, the management server 30000 creates an event correlation 2 based on the topology 2 and the event propagation model 1. The event correlation 2 shows that the cause of the event A3 (type A) is the event B2 (type B) that occurs in the component 2 (type b).

Upon determining whether the causality has been created or upon expanding the causality, if the relationship between the event propagation model and the event is determined by accessing each event propagation model, the processing time will become long in proportion to the number of event propagation models. Thus, the management server 30000 may also create in advance a data structure, from a pair of the type of management object and the type of event which occurs therein, capable of identifying the ID of the event propagation model in which that pair is included in the cause type pair or the observation type pair. The management server 30000 may also refer to such data structure upon determining whether the causality has been created or upon expanding the causality. The processing time can be shortened thereby.

The outline of this embodiment was explained above. While the ensuing explanation illustrates the following cases, the present invention is not limited to the following cases.

*Network service: As the network service, storage access via the iSCSI protocol is taken as an example. Here, the client device becomes a host computer, and the server device becomes a storage apparatus.

*Event correlation information: A rule memory is taken as an example of the event correlation information.

*Management target device: A host computer, an IP switch, and a storage apparatus are taken as examples of the management target device.

*Management object: A component is taken as an example of the management object.

*Component: An iSCSI target, volume, a RAID group, disk, and a drive name of a host computer are taken as example of the component.

*Definition index of event importance: The importance that is assigned in advance for each type of management object or each event type is taken as an example of the index for defining the event importance.

### [Example 1]

Fig. 2 to Fig. 7 are diagrams showing the configuration of the computer system and the configuration of the devices that are connected to the computer system. Fig. 8 to Fig. 18 are diagrams showing the management information that is included in the respective devices.

Fig. 2 is a diagram showing a physical configuration example of the computer system. The computer system includes storage apparatuses 20000, 20010, host computers 10000, 10010, a management server 30000, a WEB browser launch server 35000, and IP switches 40000, 40010, and these are connected via a network 45000.

The host computers 10000 to 10010, for example, receive an I/O request of a file from a client component (not shown) connected thereto, and accesses the storage apparatuses 20000 to 20010 based on such I/O request. The management server (management computer) 30000 manages the operation of the overall computer system.

The WEB (WWW) browser launch server 35000 is a computer which communicates with a GUI (Graphical User Interface) display processing module 32300 (Fig. 6) of the management server 30000 via the network 45000, and displays various types of information on a WEB browser. The user manages the devices in the computer system by referring to the information displayed on the WEB browser of the WEB browser launch server 35000. However, the management server 30000 and the WEB browser launch server 35000 may also be configured from one server.

Fig. 3 is a diagram showing a detailed internal configuration example of the host computer 10000. The host computer 10010 is also configured similarly. The host computer 10000 includes a communication port 11000 for connecting to the network 45000, a processor 12000, and a memory 13000, and configured so that these are mutually connected via a circuit such as an internal bus.

The memory 13000 may also be configured to include a disk device or the like. The memory 13000 stores a business application program 13100, an operating system 13200, and a logical volume management table 13300.

The business application 13100 uses the storage area provided by the operating system 13200, and inputs and outputs data to and from that storage area. In the ensuing explanation, the input and output of data is sometimes indicated as I/O.

The operating system 13200 performs processing for causing the business application 13100 to recognize, as a storage area, the logical volume in the storage apparatuses 20000 to 20010 connected to the host computer 10000 via the network 45000. In the ensuing explanation, a logical volume is sometimes abbreviated to a "volume".

The port 11000 is shown in Fig. 3 as though it is a single port including the I/O port and the management port. An I/O port is a port for communicating with the storage apparatus 20000 via iSCSI. A management port is a port for the management server 30000 to acquire the management information in the host computer. The configuration may also be such that the I/O port and the management port are separately provided.

Fig. 4 is a diagram showing a detailed internal configuration example of the storage apparatus 20000. The storage apparatus 20010 is also configured similarly.

The storage apparatus 20000 comprises a plurality of I/O ports 21000, 21010, one management port 21100, a management memory 23000, RAID groups 24000, 24010, storage devices 24200, 24210, 24220, 24230, logical volumes 24100, 24110, and controllers 25000, 25010. Among the above, the physical configurations (I/O ports, management port, management memory, controllers, and storage devices) are mutually connected via a circuit such as an internal bus.

The I/O port 21000 is a port for connecting to the host computers 10000, 10010 via the network 45010. Similarly, the I/O port 21010 is a circuit for connecting to the host computers 10000, 10010 via the network 45020. The management port 21100 is a port for connecting to the management server 30000 via the network 45000. The networks 45010, 45020 are a part of the network 45000.

The management memory 23000 stores various types of management information as described later. The RAID groups 24000, 24010 store data. The controllers 25000, 25010 control data and the management information in the management memory.

The management memory 23000 stores a program 23100 for managing the storage apparatus 20000, a volume management table 23200, an iSCSI target management table 23300, an I/O port management table 23400, a RAID group management table 23500, and a disk management table 23600. The management program 23100 communicates with the management server 30000 via the management port 21100, and provides the configuration information of the storage apparatus 20000 to the management server 30000.

The RAID groups 24000 to 24010 are respectively configured from one or more storage devices 24200, 24210, 24220, 24230. When configured from a plurality of storage devices, such storage devices be of a RAID configuration. Moreover, the RAID groups 24000 to 24010 are logically partitioned into a plurality of volumes 24100 to 24110.

The logical volumes 24100 and 24110 can be configured by using the storage area of one or more storage devices. The logical volumes 24100, 24110 do not necessarily have to comprise a RAID configuration.

The storage devices 24200 to 24230 can be configured, for example, as various types of storage devices capable of reading and writing data of a hard disk device, a semiconductor memory device, an optical disk device, a magneto optical disk device or the like.

When the storage devices 24200 to 24230 are configured from a hard disk device, for example, they may be configured from a FC (Fibre Channel) disk, a SCSI (Small Computer System Interface) disk, a SATA disk, ATA (AT Attachment) disk, a SAS (Serial Attached SCSI) disk, or the like.

The storage devices 24200 to 24230 may also be configured, for example, as various types of storage devices such as a flash memory, an FeRAM (Ferroelectric Random Access Memory), an MRAM (Magnetoresistive Random Access Memory), a phase-change memory (Ovonic Unified Memory), an RRAM (registered trademark: Resistance RAM), or the like. In addition, the configuration may also be such that a storage device configured as a flash memory device and a storage device configured as a hard disk device coexist.

The controllers 25000 and 25010 comprise a processor internally controlling the storage apparatus 20000, and a cache memory for temporarily storing data to be sent to and received from the host computers 10000, 10010 (both not shown). In addition, the respective controllers 25000, 25010 are interposed between the I/O ports 21000, 21010 and the RAID groups 24000, 24010, and control the transfer of data between the respective I/O ports and the respective RAID groups.

The storage apparatus 20000 may adopt a configuration other than the foregoing configuration. The storage apparatus may be configured freely so long as it comprises a configuration capable of providing a logical volume to the host computer, and reading and writing data from and to the storage device according to the access request (I/O request) received from the host computer. For example, the configuration may be such that the storage controller and the storage device are respectively stored in different enclosures.

In the example of Fig. 4, for instance, the storage controller may be configured from the management memory 23000, the controllers 25000 and 25110, and so on. In this specification, the storage apparatus may also be referred to as a storage system as an expression which includes both cases of the storage controller and the storage device existing in the same enclosure, and the storage controller and the storage device existing in separate enclosures.

Fig. 5 and Fig. 6 are diagrams showing a detailed internal configuration example of the management server 30000. The management server 30000 includes, for example, a management port 31000, a processor 31100, a storage resource 33000, an output device 34000, and an input device 34100, and these are mutually connected via a circuit such as an internal bus.

The management port 31000 connect the host computer, which is the management target device, and the storage apparatus and the switch via the network 45000. The storage resource 33000 may also be configured from a semiconductor memory device and/or an auxiliary storage device.

The output device 34000 is a device for outputting the processing results described later. The output device 34000 is configured, for example, as a display device, a printer device, a voice synthesizing device, or the like. The input device 34100 is a device for the storage administrator to input instructions to the storage apparatus. The input device 34100 is configured, for example, as a keyboard switch, a touch panel, a sound input device, or the like.

The storage resource 33000 stores a management program 32000. As shown in Fig. 6, the management program 32000 includes a program control module 32100, a device information acquisition module 32200, a GUI display processing module 32300, an event analytical processing module 32400, and an event propagation model expansion module 32500.

While each module is provided as a program module stored in the memory 32000, each module may also be provided as a hardware module. The management program 32000 does not need to be configured from a module if it can realize the processing of the respective modules. To put it differently, the explanation of the respective modules provided below may be substituted with the explanation of the management program 32000.

Returning to Fig. 5, the storage resource 33000 additionally stores an event management table 33100, an event propagation model repository 33200, a rule memory 33300, a topology generation mode repository 33400, a configuration DB 33500, an expansion target event propagation model management table 33600, an event importance management table 33700, and a number of related devices-management table 33800. Configuration information is stored in the configuration DB 33500.

The configuration information is collected by the device information acquisition module 32200 from the respective management target devices. The configuration information includes, for example, the respective items of the logical volume management table 13300 which were collected from the respective management target host computers, the respective items of the volume management table 23200 which were collective from the respective management target storages, the respective items of the iSCSI target management table 23300, the respective items of the I/O port management table 23400, the respective items of the RAID group management table 23500, and so on.

The configuration DB 33500 does not need to store all tables included in the management target device, or all items in the tables. The configuration may also be such that the management server 30000 acquires information from the management target device on a case-by-case basis as needed.

The data expression or data structure of the respective items stored in the configuration DB 33500 do not have to the same as the management target device. When the management program 32000 is to receive the respective items from the management target device, the management program 32000 may directly receive the data structure or data expression used in that management target device.

The device information acquisition module 32200 repeatedly accesses the management target device periodically or randomly, and acquires the configuration information of the management target device and the status of the respective components in the management target device. The event analytical processing module 32400 refers to the rule memory 33300 and analyzes the root cause of the abnormal state that has occurred in the management target device. Information related to the abnormal state that has occurred in the management target device is acquired by the device information acquisition module 32200.

The GUI display processing module 32300 displays, on the output device 34000, configuration management information and the like according to a request from the administrator via the input device 34100. The input device 34100 and the output device 34000 may be respectively configured as separate devices, or configured as a single, comprehensive device such as a tablet-type terminal.

Note that the management server (management computer) includes a display, a keyboard, a pointer device and the like as the I/O device, the I/O device may be other devices. As an alternative to the I/O device, the configuration may also be such that a serial interface or an Ethernet interface (Ethernet is a registered trademark) is used, and the display computer is connected to such an interface.

The display computer is configured, for example, as a WEB browser launch server 35000, and includes a display device, and a keyboard or a pointer device. The management server can send display information to the display computer and display the display information on the display computer, or receive and accept input information from the display computer. In other words, in the case of a configuration where a display computer including a man-machine interface function is provided outside the management server 30000, the output device 34000 and the input device 34100 can be omitted.

In this specification, the aggregate of one of more computers that management the computer system (information processing system) and display information to be displayed is sometimes referred to as a management system. When the management server displays information to be displayed, the management server is a management system. The combination of a management server and a display computer (for instance, the WEB browser launch server 35000 of Fig. 2) is also a management system. Processing that is equivalent to the management server may also be realized by using a plurality of computers for achieving the higher speed and greater reliability of management processing. In the foregoing case, the plurality of computers (when the display computer is to display information, then including such display computer) are the management system.

Fig. 7 is a diagram showing a detailed configuration of the IP switch 40000. IP switch 40010 is also configured similarly. The IP switch 40000 includes a processor 41000, a memory 42000 for storing various types of management information, I/O ports 43000, 43010, and a management port 44000, and these are mutually connected via a circuit such as an internal bus. The I/O port 43000 is connected to the network 45010, the I/O port 43010 is connected to the network 45020, and the management port 44000 is connected to the network 45000.

The memory 42000 may be entirely configured from a semiconductor memory, or be configured by including another storage device such as a hard disk device.

Figs. 8A, 8B and 8C are diagrams showing a configuration example of the logical volume management table 13300 included in the host computer 10000.

The logical volume management table 13300 is a table for managing the logical volumes, and comprises fields 13310, 13320, 13330, and 13340. The field 13310 registers an identifier (drive name) for identifying the respective logical volumes in the host computer. The field 13320 registers an iSCSI initiator name. The iSCSI initiator name is an identifier of the I/O port 11000 in the host computer to be used upon communicating with the storage apparatus where the substance of the logical volume exists.

The field 13330 registers an iSCSI target of the destination. The iSCSI target is an identifier of the I/O port 21000 in the storage apparatus to be used upon communication with the storage apparatus where the substance of the logical volume exists. The field 13340 registers a LUN ID to become the identifier of the logical volumes in the storage apparatus.

Fig. 8A shows an example of the specific values of the logical volume management table 13300 included in the host computer.

In other words, the logical volume shown with the drive name of (E:) in the host computer is connected to a storage apparatus via a port of the host computer shown with the iSCSI initiator name of "com.hitachi.sv1", and a port of the storage apparatus shown with the iSCSI target name of "com.hitachi.sto1", and has the LUN ID of "0" in the storage apparatus.

Fig. 9 is a diagram showing the volume management table 23200 included in the storage apparatus 20000.

The volume management table 23200 comprises fields 23210, 23220, 23230, 23240, and 23250. The field 23210 registers a volume ID to become the identifier of the respective logical volumes in the storage apparatus. The field 23220 registers a capacity of the respective logical volumes. The field 23230 registers a RAID group ID as the identifier of the RAID group to which the respective logical volumes belong.

The field 23240 registers a target ID as the identifier of the iSCSI target to which the respective logical volumes belong. The field 23250 registers a LUN ID as the identifier in the iSCSI target of the respective logical volumes.

Fig. 9 shows an example of the specific values of the volume management table 23200 included in the storage apparatus. In other words, the volume "VOL1" in the storage apparatus comprises a storage area of "20 GB", belongs to the RAID group shown with the RAID group ID of "RG1", belongs to the iSCSI target shown with the iSCSI target ID of "TG1", and has a LUN ID of "0".

Fig. 10 is a diagram showing the iSCSI target management table 23300 included in the storage apparatus 20000.

The iSCSI target management table 23300 comprises fields 23310, 23320, and 23330. The field 23310 registers a target ID to become the identifier of the iSCSI target in the storage apparatus. The field 23320 registers an iSCSI target name of the respective iSCSI targets. The field 23330 registers an iSCSI initiator name as the identifier of the port of the host computer in which access to the volume belonging to the respective iSCSI targets was permitted.

Fig. 10 shows an example of the specific values of the iSCSI target management table 23300 included in the storage apparatus. In other words, the iSCSI target "HG1" in the storage apparatus comprises an iSCSI target name of "com.hitachi.sto1", and permits access from the port of the host computer in which the iSCSI initiator name is "com.hitachi.sv1".

Fig. 11 is a diagram showing the configuration of the I/O port management table 23400 included in the storage apparatus 20000.

The I/O port management table 23400 includes, as its constituent items, a field 23410 for registering a port ID as the identifier of the respective ports of the storage apparatus, and a field 23420 for registering a MAC address as the identifier on the network 45000 of the respective ports.

Fig. 11 shows an example of the specific values of the I/O port management table 23400 included in the storage apparatus. In other words, the port "PORT1" in the storage apparatus is being used by the iSCSI targets shown with the iSCSI target ID of "TG1, TG2".

Fig. 12 is a diagram showing the configuration of the RAID group management table 23500 included in the storage apparatus 20000.

The RAID group management table 23500 comprises fields 23510, 23520, and 23530. The field 23510 registers a RAID group ID as the identifier of the respective RAID groups in the storage apparatus. The field 23520 registers a RAID level of the RAID group. The field 23530 registers a capacity of the respective RAID groups.

Fig. 12 shows an example of the specific values of the RAID group management table 23500 included in the storage apparatus. In other words, with respect to the RAID group "RG1" in the storage apparatus, the RAID level is "RAID 1" and the capacity is "100 GB".

Figs. 13A and 13B are diagrams showing a configuration example of the event management table 33100 included in the management server 30000.

The event management table 33100 comprises fields 33110, 33120, 33130, 33140, 33150, 33160, and 33170. The field 33110 registers an event ID as the identifier of the event. The field 33120 registers a device ID as the identifier of the device that was subject to an occurrence of an event such as a change in the configuration information. The field 33130 registers an identifier of the components in the device that was subject to an occurrence of an event. The field 33140 registers a type of the event that has occurred.

The field 33150 registers an importance of the event that has occurred. The field 33160 registers whether the event has been processed by the event propagation model expansion module 32500 described later. The field 33170 registers a date and time that the event occurred.

For example, upon focusing on the first row (first entry) of Fig. 13A, such first row shows that the management server 30000 detected an abnormal state in a disk shown as "DISK1" in the storage apparatus "SYS1", and that the importance of the event of that abnormal state is "1", and the event ID thereof is "EV1".

Figs. 14A and 14B are diagrams showing a configuration example of the event propagation model in the event propagation model repository 33200 included in the management server 30000. The event propagation model that is used for identifying the root cause in the failure analysis describes the combination of events which are expected to occur as a result of a certain failure and the root cause of that failure in an "IF-THEN" format.

The event propagation model is not limited to the types listed in Fig. 14A and Fig. 14B, and more rules may be used. The event propagation model repository 33200 may include a plurality of event propagation models.

The event propagation model includes, as its constituent items, a field 33210 for registering an event propagation model ID to become the identifier of the event propagation model, a field 33220 for registering an observation event type corresponding to the IF unit of the event propagation model described in the "IF-THEN" format, and a field 33230 for registering a cause event type corresponding to the THEN unit of the event propagation model described in the "IF-THEN" format. If the status of the conclusion part is normal, the relationship is such that the problem of the condition part has also been resolved.

Fig. 14A shows an example of the specific values of the event propagation model included in the management server 30000. In other words, in the event propagation model shown with "Rule1" as the event propagation model ID, when "an abnormal state of the logical volume in the host computer" and "an abnormal state of the volume in the storage apparatus" are detected as the observation event type, it is concluded that "the malfunction of the volume of the storage apparatus is the cause".

Figs. 15A to 15E are diagrams showing the configuration of the rule memory 33300 included in the management server 30000. The causality described below is information representing the correspondence relationship created based on the event propagation model described in the "IF-THEN" format for concluding what is the root cause upon receiving which event.

The rule memory 33300 includes the following information.

*A field 33310 for registering event identifying information (in the diagram, identifier (that is, device ID and component ID) of the management object and type of event) for identifying the event detected by the device information acquisition module 32200 of the management server, and a date and time that the event coinciding with the event identifying information was actually received. Note that, when the event reception date/time is unregistered, it is deemed that the event is unreceived.

*A field 33320 for registering whether the event described in the field 33310 is a negative condition in the causality.

*A field 33330 for registering information (in the diagram, identifier (that is, device ID and component ID) of the management object and type of event) to be used for registering a cause event that is concluded as being the cause of failure by the event analytical processing module 32400 when the event described in the field 33310 is detected, an ID of the causality including the cause event, and an ID of the event propagation model that was used upon expanding the causality.

There is a mutual connection relationship between the field 33310 and the field 33320, and between the field 33320 and the field 33330, and another field related to one field can be called.

Fig. 15A shows an example of the specific values of the rule memory 33300 included in the management server 30000. In other words, when the device information acquisition module 32200 detects the events of an abnormal state of the volume "VOL1" of the storage apparatus "SYS1" and an abnormal state of the logical volume (E:) of the host "HOST1", the event analytical processing module 32400 concludes that the malfunction of the volume "VOL1" of the storage apparatus "SYS1" is the root cause.

The rule memory 33300 may also be a matrix structure. In order to efficiently add or delete a causality, the rule memory 33300 may also be a data structure capable of dynamically changing the size of the matrix. For example, by creating a submatrix for each predetermined number of rows and columns and associating such submatrices with a pointer or an index, a virtual matrix can be displayed.

Figs. 16A and 16B are diagrams showing a configuration example of the topology generation mode information (this is sometimes abbreviated and referred to as the "topology generation mode") in the topology generation mode repository 33400 included in the management server 30000.

The topology generation mode is information which defines the means for generating a connection relationship (topology) between a plurality of devices to be monitored based on the configuration information that the management server 30000 acquired from the management target device.

The topology generation mode includes, as its constituent items, a field 33410 for registering a topology ID to become the identifier of the topology, a field 33420 for registering a component type in the management target device to become the starting point upon generating the topology, a field 33430 for registering a component type to become the end point upon generating the topology, a field 33440 for registering a component type which needs to be passed through upon generating the topology between the starting point component and the end point component, and a field 33450 for registering a topology generation mode between the starting point component and the end point component.

Fig. 16A shows an example of the specific values of the topology generation mode included in the management server 30000. In other words, the topology with the volume in the storage apparatus as the starting point and the logical volume in the host computer as the end point can be acquired by searching for a combination in which the iSCSI initiator name of the logical volume is equivalent to the connection admission iSCSI initiator of the iSCSI target, and in which the iSCSI target ID in the volume is equivalent to the ID in the iSCSI target.

Fig. 17 is a diagram showing a configuration example of the expansion target event propagation model management table 33600 included in the management server 30000.

The expansion target event propagation model management table 33600 includes, as its constituent items, a field 33610 for registering a type of device that was subject to the occurrence of a failure event, field 33620 for registering a type of component in the device that was subject to the occurrence of an event, a field 33630 for registering a type of the event, and a field 33640 for registering which event propagation model will become the expansion target when the event is to be processed by the event analytical processing module 32500 described later.

Fig. 17 shows an example of the specific values of the expansion target event propagation model management table included in the management server 30000. In other words, when an event of "an abnormal state of the logical volume in the host computer" occurs, the event propagation model shown with the ID of "Rule1" needs to be re-expanded.

Fig. 18 is a diagram showing a configuration example of the event importance management table 33700 included in the management server 30000.

The event importance management table 33700 includes, as its constituent items, a field 33710 for registering a type of device that was subject to the occurrence of a failure event, a field 33720 for registering a type of component in the device that was subject to the occurrence of event, a field 33730 for registering a type of the event, and a field 33740 for registering a parameter representing the importance of the event.

Fig. 18 shows an example of the specific values of the expansion target event propagation model management table included in the management server 30000. In other words, when an event of "an abnormal state of the logical volume in the host computer" occurs, the importance thereof is "5".

The processing modes to be executed by the management server 30000 are shown in Fig. 19, Fig. 20 and Fig. 21.

Fig. 19 shows a flowchart of the device information acquisition processing to be performed by the device information acquisition module 32200 of the management server 30000.

The program control module 32100 instructs the device information acquisition module 32200 to perform the device information acquisition processing each time a given period of time elapses from the previous device information acquisition processing. Note that this processing instruction does not need to be issued exactly for each given period of time, and it will suffice so as long as the processing instruction is repeatedly issued. Information acquired from the device includes the status information or performance information of the device, but such information may be respectively acquired at a different timing.

The device information acquisition module 32200 repeats the following series of processing to each of the one or more management target devices (step 61010).

The device information acquisition module 32200 instructs the management target device to send the status information and performance information of the device (step 61020).

When a response from the device is received (step 61030: YES), the device information acquisition module 32200 stores the information that was received from the device in the configuration DB 33500 (step 61040). Note that, when there is no response from the device in response to the instruction (step 61030: NO), the configuration information acquisition processing is ended.

The device information acquisition module 32200 refers to the event importance management table 33700, and determines the importance of the detected abnormal state and abnormal performance (step 61050). The device information acquisition module 32200 creates an event of the detected abnormal state and abnormal performance, and updates the event management table 33100 (step 61060).

The processing for acquiring the configuration management information to be performed by the device information acquisition module 32200 was described above.

Note that the creation of an event based on the status information refers to, for example, when the status of the component changes to a status other than normal, the creation of an event (information) corresponding to the new

(changed) status. The creation of an event based on the performance information refers to, for example, the creation of an event (information) upon becoming a performance value that is determined as not being normal in light of the predetermined evaluation standard (threshold or the like).

Fig. 20 is a flowchart of the event confirmation processing to be performed by the event analytical processing module 32400 of the management server 30000. The device information acquisition module 32200 of the management server 30000 performs the device information acquisition processing shown in Fig. 19 to the management target device, and thereafter performs the event confirmation processing to the event analytical processing module 32400.

The device information acquisition module 32200 may instruct the performance of the event confirmation processing after the acquisition processing of device information to all management target devices is complete, or instruct the performance of the event confirmation processing each time the acquisition processing of device information to one management target device is complete.

The event analytical processing module 32400 refers to the event management table 33100, and repeats the processing in the loop to the events defined in the event management table 33100 until all events are "processed" (step 62010).

The event analytical processing module 32400 selects the event of the highest importance among the unprocessed events; that is, the events in which the processing complete flag of the events defined in the event management table 33100 is "No" (step 62020).

When there are a plurality of events of the highest importance (step 62030: YES), the event analytical processing module 32400 performs the processing of step 62040. When there is only one event of the highest importance (step 62030: NO), the event analytical processing module 32400 performs the processing of step 62050.

The event analytical processing module 32400 selects the event with the oldest occurrence time among the plurality of events of the highest priority selected in step 62020 (step 62040).

The event analytical processing module 32400 changes the processing complete flag of the selected event to "Yes" (step 62050).

The event analytical processing module 32400 instructs the event propagation model expansion module 32500 to designate that event and perform the event propagation model on-demand expansion processing shown in Fig. 21.

The event analytical processing module 32400 writes the event occurrence time in the rule memory 33300, and recalculates the certainty factory of the related conclusive event (step 62070).

The processing of confirming the event to be performed by the event analytical processing module 32400 was described above.

When there are a plurality of events in the event management table 33100, it is also possible to instruct the event propagation model expansion module to simultaneously perform the event propagation model on-demand expansion processing regarding the plurality of events.

Fig. 21 is a flowchart of the event propagation model on-demand expansion processing to be performed by the event propagation model expansion module 32500 of the management server 30000.

The event propagation model expansion module 32500 refers to the expansion target event propagation model management table 33600, and acquires a list of the event propagation models corresponding to the event (that is, one of the unprocessed events) designated upon the launch of the processing (step 63010).

The event propagation model expansion module 32500 repeats the processing of steps 63030 to 63090 to the acquired event propagation model (step 63020). When no event is registered in the expansion target event propagation model management table 33600, the following processing is not performed, and the event propagation model on-demand expansion processing is ended.

The event propagation model expansion module 32500 refers to the topology generation mode repository 33400, and acquires the topology generation mode corresponding to the event propagation model from the topology generation mode repository 33400 (step 63030). When the corresponding topology generation mode does not exist in the topology generation mode repository (step 63040: NO), the following processing is not performed.

When the corresponding topology generation mode exists in the topology generation mode repository (step 63040: YES), the event propagation model expansion module 32500 acquires the topology from the configuration DB 33500 based on the acquired topology generation mode (step 63050). In other words, the event propagation model expansion module 32500 acquires the combination (topology) of the components that were subject to the occurrence of an event.

The event propagation model expansion module 32500 expands the event propagation model based on the acquired topology (step 63060), and confirms whether the expansion result thereof has been registered in the rule memory 33300 (step 63070). When the expansion result has been registered in the rule memory 33300 (step 63070: YES), the following processing is not performed.

When the expansion result does not exist in the rule memory 33300 (step 63070: NO), the event propagation model expansion module 32500 adds that expansion result as a column of the rule memory 33300 (step 63080).

The event propagation model expansion module 32500 repeatedly performs the event propagation model on-demand expansion processing regarding the conclusive event of the expansion result, and the condition event other than the events that were designated upon the launch of the processing (step 63090).

The processing of expanding the event propagation model on demand to be performed by the event propagation model expansion module 32500 was described above. When the topology is separately stored in another piece of information other than the configuration DB 33500, the foregoing processing may be performed upon referring to the other information.

How the rule memory is created and how a certainty factor is calculated are now explained by taking the computer system corresponding to the information contents shown in Fig. 2 to Fig. 18 as an example.

The program control module 32100 instructs the device information acquisition module 32200 to perform the device information acquisition processing according to instructions from the administrator or the schedule setting by a timer. The device information acquisition module 32200 logs onto the management target devices in order, and instructs the logged-on devices to send the configuration information, status information and performance information of those devices.

After the foregoing processing is complete, the device information acquisition module 32200 refers to the acquired status information and performance information, and updates the event management table 33100. Here, as shown in the first row to fourth row of the event management table 33100 of Fig. 13A, assumed is a case where the events of "EV1" to "EV4" were detected.

The event analytical processing module 32400 selects the event of highest importance among the unprocessed events in the event management table 33100; that is, the events in which the processing complete flag of the events defined in the event management table 33100 is "No". Here, since the event shown as "EV4" has the highest importance of "5", "EV4" is selected.

The event analytical processing module 32400 instructs the event propagation model expansion module 32500 to designate that event "EV4" and perform the event propagation model on-demand expansion processing.

The event propagation model expansion module 32500 refers to the expansion target event propagation model management table 33600, and acquires a list of the event propagation models corresponding to the event "EV4". For example, upon referring to the expansion target event propagation model management table 33600 shown in Fig. 17, it can be understood that the expansion of "Rule1" is required when the event of "an abnormal state of the logical volume in the host computer" occurs.

In the event propagation model "Rule1" shown in Fig. 14A, "an abnormal state of the logical volume in the host computer" and "an abnormal state of the volume in the storage apparatus" are defined as the observation event. Upon referring to the topology generation mode shown in Fig. 16A, the topology generation mode "TP1" with the volume of the storage apparatus as the starting point and the logical volume of the host computer as the end point is defined. Thus, the topology is acquired by using the foregoing topology generation mode.

The expansion module 32500 refers to the volume management table 23200 shown in Fig. 9 (more accurately, items in the configuration DB 3500 stored by the management server 30000 and which correspond to the volume management table 23200), and, upon focusing on the volume "VOL1" of the storage apparatus "SYS1", the target ID thereof is "TG1".

Subsequently, the expansion module 32500 refers to the iSCSI target management table 13300 shown in Fig. 8 (more accurately, the items in the configuration DB 33500 stored by the management server 30000 and which correspond to the iSCSI target management table 13300), and searches for those in which the iSCSI target ID is "TG1". The connection admission iSCSI initiator name of the entry in which the iSCSI target ID is "TG1" is indicated as "com.hitachi.sv1".

The expansion module 32500 refers to the iSCSI target management table 13300 shown in Fig. 8A (items in the configuration DB 33500 stored by the management server 30000 and which correspond to the iSCSI target management table 13300), and searches for a logical volume in which the iSCSI initiator name is "com.hitachi.sv1".

The expansion module 32500 confirms whether the LUN ID of the searched logical volume (E:) of the host computer "HOST1" is equivalent to the LUN ID of the volume "VOL1" of the storage apparatus "SYS1".

Consequently, there is a combination of the logical volume (E:) of the host computer "HOST1" and the volume "VOL1" of the storage apparatus "SYS1" as one topology including the logical volume of the host computer and the volume of the storage apparatus.

Thus, upon detecting "an abnormal state of the logical volume (E:) of the host computer HOST1" and "an abnormal state of the volume VOL1 of the storage apparatus SYS1" as the observation event, the pattern which concludes the "malfunction of the volume VOL1 of the storage system SYS1" as the root cause becomes the expansion result (that is, the causality to be expanded). When this expansion result does not exist in the rule memory, the expansion result is added to the rule memory.

Based on the foregoing processing, the causality related to the event propagation model Rule1 is added to the rule memory, and becomes the state shown in Fig. 15A.

Subsequently, the event analytical processing module writes the event occurrence time in the rule memory, and recalculates the certainty factor of the related conclusive event. In other words, the event analytical processing module discovers the observation event of "an abnormal state of the logical volume (E:) of the host computer HOST1" in the rule memory, and writes "2010-01-01 15:00:30" as the occurrence time of EV4. Subsequently, the event analytical processing module finds the causality related to that observation event. In Fig. 15A, the causality shown with the ID of ExRule1 is found. As the observation event related to the foregoing causality, there are two types; namely, "an abnormal state of the logical volume (E:) of the host computer HOST1" and "an abnormal state of the volume VOL1 of the storage apparatus SYS1", and, since only the former event has been detected, the certainty factor of the causality ExRule1 becomes 50%. This certainty factor is written as the certainty factor of the "malfunction of the volume VOL1 of the storage apparatus SYS1" as the root cause.

Based on the foregoing processing, the occurrence time of the event EV4 is added to the rule memory, and becomes the state of Fig. 15B.

Subsequently, the event analytical processing module 32400 sequentially performs the processing to the unprocessed events in the event management table 33100, and starts the processing to the event EV2. The event analytical processing module 32400 instructs the event propagation model expansion module 32500 to designate that event and perform the event propagation model on-demand expansion processing.

The event propagation model expansion module 32500 refers to the expansion target event propagation model management table 33600, and acquires a list of the event propagation models corresponding to the event. For example, upon referring to the expansion target event propagation model management table 33600 shown in Fig. 17, it can be understood that the expansion of "Rule1" is required when the event of "an abnormal state of the volume in the storage apparatus" occurs.

In the event propagation model Rule1 shown in Fig. 14A, "an abnormal state of the logical volume in the host computer" and "an abnormal state of the volume in the storage apparatus" are defined as the observation event. Upon referring to the topology generation mode shown in Fig. 16A, the topology generation mode TP1 with the I/O port of the storage apparatus as the starting point and the logical volume of the host computer as the end point is defined. Thus, the topology is acquired by using the foregoing topology generation mode TP1.

Consequently, there is a combination of the logical volume (E:) of the host computer HOST1 and the volume VOL1 of the storage apparatus SYS1 as one topology including the logical volume of the host computer and the volume of the storage apparatus.

Thus, upon detecting "an abnormal state of the logical volume (E:) of the host computer HOST1" and "an abnormal state of the volume VOL1 of the storage apparatus SYS1" as the observation event, the pattern which concludes the "malfunction of the volume VOL1 of the storage system SYS1" as the root cause becomes the expansion result (that is, the causality to be expanded). Since this expansion result already exists in the rule memory 33300, the event propagation model on-demand expansion processing without adding the expansion result to the rule memory 33300.

The event analytical processing module 32400 writes the event occurrence time in the rule memory 33300, and recalculates the certainty factor of the related conclusive event. In other words, the event analytical processing module discovers the observation event of "an abnormal state of the volume VOL1 of the storage apparatus SYS1" in the rule memory 33300, and writes "2010-01-01 15:00:10" as the occurrence time of the event EV2.

Subsequently, the event analytical processing module 32400 finds the causality related to that observation event. In Fig. 15B, the causality shown with the ID of "ExRule1" is found. As the observation event related to the foregoing causality, there are two types; namely, "an abnormal state of the logical volume (E:) of the host computer HOST1" and "an abnormal state of the volume VOL1 of the storage apparatus SYS1". Since both of these events have been detected, the certainty factor of the causality ExRule1 becomes 100%. The event analytical processing module 32400 writes this certainty factor (100%) as the certainty factor of the "malfunction of the volume VOL1 of the storage apparatus SYS1" as the root cause.

Based on the foregoing processing, the occurrence time of the event EV2 is added to the rule memory, and becomes the state of Fig. 15C.

The effect of this example configured as described above is now explained. Fig. 25 is a diagram showing a physical configuration example of the computer system. This computer system is configured by including a storage apparatus 20000, a host computer 10000, a management server 30000, a WEB browser launch server 35000, and an IP switch 40000, and these are connected via a network 45000.

In the ensuing explanation, let it be assumed that the host computers 10000 to 10010 are configured from 100 host computers, and the device ID thereof is HOST1 to HOST100. Let it be assumed that HOST1 to HOST100 are respectively connected to the storage apparatus 20000. Let it be assumed that the device ID of the storage apparatus 20000 is SYS1. Moreover, let it be assumed that HOST1 to HOST100 are accessing the volume of the RAID group RG1 in the storage apparatus SYS1.

Meanwhile, let it be assumed that the device ID of the host computer 10020 is HOST101. Let it be assumed that HOST101 is connected to the storage apparatus 20010. Let it be assumed that the device ID of the storage apparatus 20010 is SYS2. Let it be assumed that HOST101 is accessing the volume of the RAID group RG1 in the storage apparatus SYS2. Let it be assumed that HOST101 is of high business importance in comparison to the other devices in the computer system and, therefore, let it be assumed that the importance of the event that occurs in HOST101 is higher in comparison to the events that occur in the other devices.

A case is now explained in the computer shown in Fig. 25 where, immediately after the failure of the RAID group RG1 in the storage apparatus SYS1, a failure occurs in the RAID group RG1 in the storage apparatus SYS2, and, subsequent to the logical volume failure in HOST1 to HOST100, a logical volume failure occurs in HOST101.

Fig. 26 is a diagram showing the event management table 33100 immediately after the occurrence of the successive failures. The event EV1 has occurred due to the failure of the RAID group RG1 in the storage apparatus SYS1, the events EV2 to EV101 have occurred due to the logical volume failure in HOST1 to HOST100, the event EV102 has occurred due to the failure of the RAID group RG1 in the storage apparatus SYS2, and the event EV103 has occurred due to the logical volume failure of HOST101, respectively.

Since HOST101 has high business importance in comparison to the other devices in the computer system, the event importance of the event EV103 is "5", and the event importance of other events is "1".

The case of not adopting the configuration of this example is foremost explained. Here, even when there is an event of high event importance, an event of low event importance that was stored first in the event management table 33100 will be processed first. Analysis regarding the event of high event importance is postponed.

In other words, the event propagation model on-demand expansion processing and certainty factor calculation processing corresponding to the event EV103 of high event importance are performed after the event propagation model on-demand expansion processing and certainty factor calculation processing corresponding to the events EV1 to EV102 of low event importance.

When assuming that the time required for performing the event propagation model on-demand expansion processing and certainty factor calculation processing per event is a given time T, the time of "T x 103" is required until the analysis result corresponding to the event EV103 is output. Accordingly, even though it is an event of high event importance, much time is required until the administrator is notified of the analysis result of that event.

Meanwhile, in this example, since an event of high event importance is analyzed first, for instance, it is possible to immediately analyze an event which as a significant impact on business and notify the administrator of the result.

In other words, with this example, the event propagation model on-demand expansion processing and certainty factor calculation processing corresponding to the event EV103 of high event importance are performed first among all events. Accordingly, in this example, the required time until the analysis result corresponding to the event EV103 is output can be considerably shortened to "T x 1".

In this example, since the causality is created to the extent required upon the occurrence of an event rather than creating all causalities in advance before the occurrence of an event, it is possible to reduce the size of the rule memory 33300. Nevertheless, while this may differ depending on the number of management target devices, with a relatively large-scale computer system, longer-than-expected time is required for the processing of expanding the event propagation model on demand. Based on this new discovery, in this example, rather than processing the events in the order that they were stored in the event management table 33100, the events of higher event importance are processed first. Consequently, in this example, it is possible to analyze an event to be warned urgently first, and notify the administrator of the analysis result. Accordingly, it is possible to improve the reliability and usability.

### [Example 2]

Example 2 is now explained. Since each of the following examples including this example are modified examples of Example 1, the differences with Example 1 are mainly explained.

In Example 2, explained is the separate event propagation model on-demand expansion processing to be performed by the event propagation model expansion module 32500 of the management program 32000.

In Example 1, upon performing the event propagation model on-demand expansion processing regarding a plurality of events, the event propagation model expansion module 32500 is instructed to perform the expansion in descending order from the event of highest importance.

However, in an information processing system (computer system), since one failure spills over to multiple devices, numerous abnormality events are simultaneously detected by the management program 32000. It is not always the case that all of these events are of the same importance. Nevertheless, if the event propagation model on-demand expansion processing is performed in parallel in order of event importance regarding the abnormality events having the same root cause, the time required to reflect the certainty factor will increase since the start of processing events of low importance will be delayed.

For example, when one event among three events is of low event importance, the certainty factor of the root cause will stop at 2/3 until the expansion processing of the event propagation models regarding such event of low event importance is completed. When the expansion processing of the event propagation models regarding such event of low event importance is completed, the certainty factor rises to 3/3.

In order to resolve the foregoing problem, in Example 2, the event analytical processing in the management server 30000 is changed. The revised processing to be executed by the management server 30000 is shown in Figs. 22A and 22B. Note that, since the remainder of the processing to be performed by the management server 30000 is the same as Example 1, the explanation thereof is omitted.

Figs. 22A and 22B are flowcharts of the event confirmation processing to be performed by the event analytical processing module 32400 of the management server 30000 in Example 2. Note that the device information acquisition module 32200 of the management server 30000 performs the device information acquisition processing shown in Fig. 19 to the management target device, and thereafter instructs the event analytical processing module 32400 to perform the event confirmation processing.

The event analytical processing module 32400 refers to the event management table 33100, and repeats the processing in the loop to the events defined in the event management table 33100 until all events are "processed" (step 64010).

The event analytical processing module 32400 selects the event of the highest importance among the unprocessed events; that is, the events in which the processing complete flag of the events defined in the event management table 33100 is "No" (step 64020). When there are a plurality of events of the highest importance (step 64030: YES), the event analytical processing module 32400 performs the processing of step 64040. When there is only one event of the highest importance (step 64030: NO), the event analytical processing module 32400 performs the processing of step 64050.

The event analytical processing module 32400 selects the event with the oldest occurrence time among the plurality of events of the highest priority selected in step 62020 (step 64040).

The event analytical processing module 32400 changes the processing complete flag of the selected event to "Yes" (step 64050).

The event analytical processing module 32400 instructs the event propagation model expansion module 32500 to designate that event and perform the event propagation model on-demand expansion processing shown in Fig. 21 (step 64060).

The event analytical processing module 32400 writes the event occurrence time in the rule memory 33300, and acquires all related conclusive events (step 64070).

Proceeding to Fig. 22B, the event analytical processing module 32400 repeats the processing in the loop for each related conclusive event (step 64080).

Among the observation events related to the conclusive event, the event analytical processing module 32400 acquires the unreceived events (step 64090). The event analytical processing module 32400 repeats the processing in the loop for each acquired unreceived observation events (step 64100).

The event analytical processing module 32400 refers to the event management table 33100, and confirms whether there is an event in which the type of management object and the type of event are the same, and which is an unprocessed event (step 64110). When there is a corresponding event (step 64120: YES), the event analytical processing module 32400 writes the event occurrence time in the corresponding observation event of the rule memory 33300 (step 64130).

After performing the foregoing processing to the unreceived observation events that were acquired in step 64090, the event analytical processing module 32400 recalculates the certainty factor of the conclusive event (step 64140).

The event confirmation processing to be performed by the event analytical processing module 32400 of Example 2 was described above.

When there are a plurality of events in the event management table 33100, it is also possible to instruct the event propagation model expansion module 32500 to simultaneously perform the event propagation model on-demand expansion processing regarding the plurality of events.

How the rule memory 33300 is created and how a certainty factor is calculated based on the processing of Example 2 are now explained by taking the computer system corresponding to the information contents shown in Fig. 6 to Fig. 18 as an example.

The program control module 32100 instructs the device information acquisition module 32200 to perform the device information acquisition processing according to instructions from the administrator or the schedule setting by a timer. The device information acquisition module 32200 logs onto the management target devices in order, and instructs the logged-on devices to send the configuration information, status information and performance information of those devices.

After the foregoing processing is complete, the device information acquisition module 32200 refers to the acquired status information and performance information, and updates the event management table 33100. Here, as shown in the first row to fourth row of the event management table 33100 of Fig. 13A, assumed is a case where the events of event EV1 to event EV4 were detected.

The event analytical processing module 32400 selects the event of highest importance among the unprocessed events in the event management table 33100; that is, the events in which the processing complete flag of the events defined in the event management table 33100 is "No". Here, since the event shown as "EV4" has the highest importance of "5", the event analytical processing module 32400 selects the event EV4.

The event analytical processing module 32400 instructs the event propagation model expansion module 32500 to designate that event and perform the event propagation model on-demand expansion processing.

The event propagation model expansion module 32500 refers to the expansion target event propagation model management table 33600, and acquires a list of the event propagation models corresponding to the event. For example, upon referring to the expansion target event propagation model management table 33600 shown in Fig. 17, it can be understood that the expansion of "Rule1" is required when the event of "an abnormal state of the logical volume in the host computer" occurs.

In the event propagation model Rule1 shown in Fig. 14A, "an abnormal state of the logical volume in the host computer" and "an abnormal state of the volume in the storage apparatus" are defined as the observation event. Upon referring to the topology generation mode shown in Fig. 16A, the topology generation mode TP1 with the volume of the storage apparatus as the starting point and the logical volume of the host computer as the end point is defined. Thus, the topology is acquired by using the foregoing topology generation mode TP1.

Consequently, there is a combination of the logical volume (E:) of the host computer HOST1 and the volume VOL1 of the storage apparatus SYS1 as one topology including the logical volume of the host computer and the volume of the storage apparatus.

Thus, upon detecting "an abnormal state of the logical volume (E:) of the host computer HOST1" and "an abnormal state of the volume VOL1 of the storage apparatus SYS1" as the observation event, the pattern which concludes the "malfunction of the volume VOL1 of the storage system SYS1" as the root cause becomes the expansion result (that is, the causality to be expanded). When this expansion result does not exist in the rule memory 33300, the expansion result is added to the rule memory 33300.

Based on the foregoing processing, the causality related to the event propagation model Rule1 is added to the rule memory 33300, and becomes the state shown in Fig. 15A.

The event analytical processing module 32400 writes the event occurrence time in the rule memory 33300. In other words, the event analytical processing module 32400 discovers the observation event of "an abnormal state of the logical volume (E:) of the host computer HOST1" in the rule memory 33300, and writes "2010-01-01 15:00:30" as the occurrence time of the event EV4. Consequently, the rule memory 33300 becomes the state of Fig. 15B.

The event analytical processing module 32400 repeats the processing in the loop for each observation event of the expanded causality ExRule1.

The event analytical processing module 32400 foremost confirms whether the observation event is unreceived. When the observation event is unreceived, the event analytical processing module 32400 refers to the event management table 33100, and confirms whether there is an event in which the management object type and event type are the same, and which is an unprocessed event.

When there is a corresponding event, the event analytical processing module 32400 writes the event occurrence time in the rule memory 33300.

While the observation event of "an abnormal state of the volume VOL1 of the storage apparatus SYS1" of the causality ExRule1 is unreceived, upon referring to the event management table 33100, there is an event EV2 of "an abnormal state of the volume VOL1 of the storage apparatus SYS1". Accordingly, the event analytical processing module 32400 writes "2010-01-01 15:00:10" as the occurrence time of EV2 in that observation event of the rule memory 33300.

The event analytical processing module 32400 recalculates the certainty factor of the causality. In other words, as the observation event related to the foregoing causality ExRule1, there are two types; namely, "an abnormal state of the logical volume (E:) of the host computer HOST1" and "an abnormal state of the volume VOL1 of the storage apparatus SYS1". Since both of these events have been detected, the certainty factor of the causality ExRule1 becomes 100%. The event analytical processing module 32400 writes this certainty factor (100%) as the certainty factor of the "malfunction of the volume VOL1 of the storage apparatus SYS1" as the root cause.

Based on the foregoing processing, the occurrence time of the event EV2 is added to the rule memory, and becomes the state of Fig. 15C.

The event analytical processing to be performed by the event analytical processing module 32400 of Example 2 was explained above.

Example 2 configured as described above also yields the same effects as Example 1. In addition, with Example 2, upon expanding the event propagation model, the management program 32000 searches for unreceived events from the event light among the observation events included in the expanded causality information and thereby processes such unreceived events, and reflects the results in the certainty factor.

Consequently, in Example 2, in the case of adopting the on-demand expansion method in a large-scale system, even if numerous failures having the same failure cause are simultaneously received, it is possible to promptly and appropriately evaluate the certainty factor relative to the expanded causality.

### [Example 3]

Example 3 explains the event propagation model expansion processing to be performed by the event propagation model expansion module 32500 of the management program 32000.

In Example 1, the order of subjecting which event to the event propagation model on-demand expansion processing was determined according to the event importance. Nevertheless, when there are a plurality of events of the same event importance, it is desirable to perform the expansion processing in order from the event in which much time is not required for the expansion.

As described above, an event is set with a valid period, and an event in which a given period of time has lapsed from the occurrence thereof is excluded from the target of analysis. Accordingly, if the expansion processing of more events is performed immediately after the occurrence of an event, it is possible to inhibit the occurrence of a situation where an event is excluded from the target of analysis before the expansion of the event propagation models required for the event analysis is complete. Nevertheless, in Example 1, it is not possible to estimate the time required for the expansion of the event propagation models regarding each event.

In order to resolve the foregoing problem, in Example 3, the event analytical processing in the management server 30000 is changed. The number of related instruments-management table 33800 included in the management server 30000 of Example 3 is shown in Fig. 23, and the processing flow to be performed by the management server 30000 is shown in Fig. 24, respectively. Note that the remainder of the information and flow of the management server 30000 is the same as Example 1 or Example 2.

Fig. 23 is a diagram showing a configuration example of the number of related devices-management table 33800 included in the management server 30000.

The number of related devices-management table 33800 includes, as its constituent items, a field 33810 for registering a type of device to be managed by the management server 30000, a field 33820 for registering a device ID to become the identifier of the device, a field 33830 for registering a type of device in a connection relationship with the device, and a field 33840 for registering the number of devices in a connection relationship with the device.

Fig. 23 shows an example of the specific values of the number of related devices-management table 33800. In other words, Fig. 23 shows that the host computer shown with "HOST1" as the device ID is in a connection relationship with one storage apparatus.

The processing method of the event propagation model on-demand expansion processing to be performed by the management server 30000 in this example is shown in Fig. 24. Note that the other processing to be performed by the management server 30000 is the same as Example 1.

Fig. 24 is a flowchart of the event analytical processing to be performed by the event analytical processing module 32400. The device information acquisition module 32200 performs the device information acquisition processing shown in Fig. 25 to the management target device, and thereafter instructs the event analytical processing module 32400 to perform the event confirmation processing. The timing that the device information acquisition module 32200 instructs the performance of the event confirmation processing may be after the processing to all management target devices is complete, or as needed after the processing to one management target device is complete.

The event analytical processing module 32400 refers to the event management table 33100, and repeats the processing in the loop to the events defined in the event management table 33100 until all events are "processed" (step 65010).

The event analytical processing module 32400 selects the event of the highest importance among the unprocessed events; that is, the events in which the processing complete flag of the events defined in the event management table 33100 is "No" (step 65020). When there are a plurality of events of the highest importance (step 65030: YES), the event analytical processing module 32400 performs the processing of step 65040. When there is only one event of the highest importance (step 65030: NO), the event analytical processing module 32400 performs the processing of step 65070.

The event analytical processing module 32400 refers to the expansion target event propagation model management table 33600, and acquires a list of the event propagation models corresponding to the event (step 65040). The event analytical processing module 32400 refers to the number of related devices-management table 33800, and calculates the number of related devices required for acquiring information from the configuration DB 33500 upon the expansion of the corresponding event propagation model (step 65050). In step 65040, when a plurality of event propagation models are acquired, the number of related devices regarding each event propagation model is calculated and totaled. As a result of the foregoing acquisition, the event analytical processing module 32400 selects one event with the smallest number of related devices (step 65060).

The event analytical processing module 32400 changes the processing complete flag of the selected event to "Yes" (step 65070).

The event analytical processing module 32400 instructs the event propagation model expansion module 32500 to designate that event and perform the event propagation model on-demand expansion processing shown in Fig. 21 (step 65080).

Finally, the event analytical processing module 32400 writes the event occurrence time in the rule memory 33300, and additionally recalculates the certainty factor of the related conclusive event (step 65090).

The event analytical processing to be performed by the event analytical processing module 32400 was described above. Note that, when there are a plurality of events in the event management table 33100, it is also possible to instruct the event propagation model expansion module 32500 to simultaneously perform the event propagation model on-demand expansion processing regarding the plurality of events.

How the rule memory is created and how a certainty factor is calculated based on the processing of Example 3 are now explained by taking the computer system corresponding to the information contents shown in Fig. 2 to Fig. 18 as an example.

The program control module 32100 instructs the device information acquisition module 32200 to perform the device information acquisition processing according to instructions from the administrator or the schedule setting by a timer. The device information acquisition module 32200 logs onto the management target devices in order, and instructs the logged-on devices to send the configuration information, status information and performance information of those devices.

After the foregoing processing is complete, the device information acquisition module 32200 refers to the acquired status information and performance information, and updates the event management table 33100. Here, as shown in the first row and second row of the event management table 33100 of Fig. 13B, assumed is a case where the events of event EV1 to event EV2 were detected.

The event analytical processing module 32400 selects the event of highest importance among the unprocessed events in the event management table 33100; that is, the events in which the processing complete flag of the events defined in the event management table 33100 is "No". Here, the importance of the two events shown as "EV1" and "EV2" is "5".

Thus, the event analytical processing module 32400 refers to the expansion target event propagation model management table, and acquires a list of the event propagation models corresponding to the event. For example, upon referring to the expansion target event propagation model management table 33600 shown in Fig. 17, it can be understood that the expansion of the event propagation model Rule2 is required when the event of "an abnormal state of the logical volume in the host computer" occurs.

The event analytical processing module 32400 refers to the number of related devices-management table 33800, and calculates the number of related devices required for acquiring information from the configuration DB 33500 upon the expansion of the corresponding event propagation model Rule2.

Since the event propagation model Rule2 is a rule based on the combination of the host computer and the storage apparatus, the number of related devices between both devices is confirmed. In other words, it can be understood that the host computer HOST1 defined in the event EV1 is related to one storage apparatus, and the storage apparatus SYS1 defined in the event EV2 is related to three host computers, respectively. As a result of the foregoing acquisition, the event analytical processing module 32400 selects the event EV1 with the smallest number of related devices.

The event propagation model expansion module 32500 acquires a list of the event propagation models corresponding to the event EV1 from the expansion target event propagation model management table 33600. For example, upon referring to the expansion target event propagation model management table 33600 shown in Fig. 17, it can be understood that the expansion of the event propagation model Rule2 is required when the event of "an abnormal state of the logical volume in the host computer" occurs.

In the event propagation model Rule2 shown in Fig. 14B, "an abnormal state of the logical volume in the host computer" and "an abnormal state of the RAID group of the storage apparatus" are defined as the observation event. Upon referring to the topology generation mode shown in Fig. 16B, the topology generation mode TP2 with the RAID group of the storage apparatus as the starting point and the logical volume of the host computer as the end point is defined. Thus, the topology is acquired by using the foregoing topology generation mode TP2.

Consequently, as one topology including the logical volume of the host computer and the RAID group of the storage apparatus, there exists a combination of the logical volume (E:) of the host computer HOST1, and the RAID group RG1 of the storage apparatus SYS1.

Accordingly, upon detecting "an abnormal state of the logical volume (E:) of the host computer HOST1", and "an abnormal state of the RAID group RG1 of the storage apparatus SYS1" as the observation event, the pattern which concludes the "malfunction of the RAID group RG1 of the storage system SYS1" as the root cause becomes the expansion result (that is, the causality to be expanded). When this expansion result does not exist in the rule memory 33300, the expansion result is added to the rule memory 33300.

Based on the foregoing processing, the causality related to the event propagation model Rule2 is added to the rule memory 33300, and becomes the state shown in Fig. 15D.

The event analytical processing module 32400 writes the event occurrence time in the rule memory 33300, and recalculates the certainty factor of the related conclusive event.

The event analytical processing module 32400 sequentially performs the processing to the unprocessed events in the event management table 33100, and starts the processing to the event EV2. The event analytical processing module 32400 instructs the event propagation model expansion module 32500 to designate that event and perform the event propagation model on-demand expansion processing.

The event propagation model expansion module 32500 refers to the expansion target event propagation model management table 33600, and acquires a list of the event propagation models corresponding to the event. For example, upon referring to the expansion target event propagation model management table 33600 shown in Fig. 17, it can be understood that the expansion of the event propagation model Rule2 is required when the event of "an abnormal state of the RAID group in the storage apparatus" occurs.

In the event propagation model Rule2 shown in Fig. 14B, "an abnormal state of the logical volume in the host computer" and "an abnormal state of the volume in the storage apparatus" are defined as the observation event. Upon referring to the topology generation mode shown in Fig. 16B, the topology generation mode TP2 with the RAID group of the storage apparatus as the starting point and the logical volume of the host computer as the end point is defined. Thus, the topology is acquired by using the foregoing topology generation mode TP2.

Consequently, as one topology including the logical volume of the host computer and the volume of the storage apparatus, there exists a combination of the logical volume (E:) of the host computer HOST1, the logical volume (E:) of the host computer HOST2, the logical volume (E:) of the host computer HOST3, and the RAID group RG1 of the storage apparatus SYS1.

Thus, upon detecting "an abnormal state of the logical volume (E:) of the host computer HOST1", "an abnormal state of the logical volume (E:) of the host computer HOST2", "an abnormal state of the logical volume (E:) of the host computer HOST3", and "an abnormal state of the RAID group RG1 of the storage apparatus SYS1" as the observation event, the pattern which concludes the "malfunction of the RAID group RG1 of the storage system SYS1" as the root cause becomes the expansion result (that is, the causality to be expanded). Since this expansion result only partially exists in the rule memory 33300, the expansion result is added to the rule memory 33300.

The event analytical processing module 32400 writes the event occurrence time in the rule memory 33300, and recalculates the certainty factor of the related conclusive event.

Based on the foregoing processing, the causality related to the event propagation model Rule2 is added to the rule memory 33300, and becomes the state shown in Fig. 15E.

This example configured as described above also yields the same effects as Example 1. In addition, according to this example, since the time required for expanding the event propagation model of the respective events is estimated, it is possible to start expanding from the event with a short required time. Accordingly, in this example, it is possible to inhibit the occurrence of a situation where an event is excluded from the target of analysis before the expansion of the event propagation models required for the event analysis is complete. It is thereby possible to improve the reliability and usability.

Note that the configuration described in this embodiment can also be expressed as a method of managing a computer system as shown below.

### "Expression 1.

A method for causing a management computer to manage a computer system comprising a plurality of management target devices,
wherein the management computer can use a storage resource storing predetermined information,
wherein the predetermined information includes:
(1) a topology showing a relationship of a plurality of management objects in relation to the plurality of management objects which are the plurality of management target devices or a plurality of components included in the plurality of management target devices;
(2) an event propagation model showing that, caused by a first event of a predetermined type which occurs in a management object of a first type, a second event of another predetermined type occurs in a management object of a second type; and
(3) causality information including one or more causalities,
wherein the causality shows that, caused by the first event of a predetermined type which occurs in a first management object of a first type, the second event of another predetermined type occurs in a second management object of a second type, and
wherein the management computer:
(A) detects an event related to a problem that has occurred in a predetermined management object;
(B) determines, when a plurality of the events are detected, an event importance of each of the plurality of events;
(C) executes an on-demand expansion for generating, in the causality information, a predetermined causality based on the topology and the event propagation model in descending order from the event determined in (B) as having a highest event importance;
(D) records that the detected event has occurred relative to the predetermined causality; and
(E) analyzes the detected event by using the predetermined causality."

### [Reference Signs List]

- 10000 to 10020: host computer
- 20000 to 20010: storage apparatus
- 30000: management server
- 32000: management program
- 33000: storage resource
- 40000 to 40030: switch

## Claims

1. A computer program for causing a computer to function as a management computer for managing a computer system comprising a plurality of management target devices,
wherein the computer program can use a storage resource storing predetermined information,
the predetermined information includes:
(1) a topology showing a relationship of a plurality of management objects in relation to the plurality of management objects which are the plurality of management target devices or a plurality of components included in the plurality of management target devices;
(2) an event propagation model showing that, caused by a first event of a predetermined type which occurs in a management object of a first type, a second event of another predetermined type occurs in a management object of a second type; and
(3) causality information including one or more causalities,
the causality shows that, caused by the first event of a predetermined type which occurs in a first management object of a first type, the second event of another predetermined type occurs in a second management object of a second type, and
the computer program causes the computer to:
(A) detect an event related to a problem that has occurred in a predetermined management object;
(B) determine, when a plurality of the events are detected, an event importance of each of the plurality of events;
(C) execute an on-demand expansion for generating, in the causality information, a predetermined causality, based on the topology and the event propagation model in descending order from the event determined in (B) as having a highest event importance;
(D) record that the detected event has occurred relative to the predetermined causality; and
(E) analyze the detected event by using the predetermined causality.

2. A computer program according to claim 1,
wherein the event importance is defined in advance based on a predetermined index.

3. A computer program according to claim 2,
wherein the predetermined index is at least one of:
the event importance being determined for each type of management object; or
the event importance being determined for each type of event; or
the event importance being determined according to an importance that is set in advance regarding the management object; or
the event importance being determined according to a deviance of measurement value from a threshold or a baseline in a case of a performance failure.

4. A computer program according to claim 3,
wherein, when there are a plurality of events having an equal event importance, an event with an oldest occurrence time is selected among the plurality of events.

5. A computer program according to claim 4,
wherein an analysis result of the detected event in the (E) is output to a display device.

6. A computer program according to claim 5,
wherein a valid period is set in the detected event, and
when the valid period elapses, the detected event is excluded from a target of analysis in the (E).

7. A computer program according to claim 6,
wherein, prior to analyzing the detected event in the (E), the computer program causes the computer to:
(F) detect, among the detected events, an event on which the on-demand expansion has not been performed and which is an unprocessed event existing in the predetermined causality; and
(G) record that the unprocessed event has occurred relative to the predetermined causality.

8. A computer program according to claim 7,
wherein, in the analysis of the detected event in the (E), a detection ratio of the events that are defined in the predetermined causality is calculated as a certainty factor showing a probability that the first event is the cause.

9. A computer program according to claim 8,
wherein the predetermined information includes:
(4) a number of related instruments-management table which records the number of management objects of the second type in a connection relationship with management objects of the first type, and
when there are a plurality of events having an equal event importance, the computer program causes the computer to:
(H) estimate the number of topologies showing a relationship of the plurality of management objects, which are required upon expanding the event propagation model, by referring to the number of related instruments-management table, and determines which event among the plurality of events having an equal event importance is to be preferentially expanded based on the estimated result.

10. A management computer for managing a computer system comprising a plurality of management target devices, comprising:
a storage resource for storing a management program; and
a processor for executing the management program,
wherein the storage resource stores, as predetermined information:
(1) a topology showing a relationship of a plurality of management objects in relation to the plurality of management objects which are the plurality of management target devices or a plurality of components included in the plurality of management target devices;
(2) an event propagation model showing that, caused by a first event of a predetermined type which occurs in a management object of a first type, a second event of another predetermined type occurs in a management object of a second type; and
(3) causality information including one or more causalities,
the causality shows that, caused by the first event of a predetermined type which occurs in a first management object of a first type, the second event of another predetermined type occurs in a second management object of a second type, and
the management program causes the processor to:
(A) detect an event related to a problem that has occurred in a predetermined management object;
(B) determine, when a plurality of the events are detected, an event importance of each of the plurality of events;
(C) execute an on-demand expansion for generating, in the causality information, a predetermined causality, based on the topology and the event propagation model in descending order from the event determined in (B) as having a highest event importance;
(D) record that the detected event has occurred relative to the predetermined causality; and
(E) analyze the detected event by using the predetermined causality.

11. A management computer according to claim 10,
wherein the event importance is determined according to at least one of the following:
determined for each type of management object; or
determined for each type of event; or
determined according to an importance that is set in advance regarding the management object; or
determined according to a deviance of measurement value from a threshold or a baseline in a case of a performance failure.

12. A management computer according to claim 10,
wherein, prior to analyzing the detected event in the (E), the management program causes the processor to:
(F) detect, among the detected events, an event on which the on-demand expansion has not been performed and which is an unprocessed event existing in the predetermined causality; and
(G) record that the unprocessed event has occurred relative to the predetermined causality.

13. A management computer according to claim 12,
wherein, in the analysis of the detected event in the (E), a detection ratio of the events that are defined in the predetermined causality is calculated as a certainty factor showing a probability that the first event is the cause.

14. A management computer according to claim 10,
wherein the predetermined information includes:
(4) a number of related instruments-management table which records the number of management objects of the second type in a connection relationship with management objects of the first type, and
when there are a plurality of events having an equal event importance, the management program causes the processor to:
(H) estimate the number of topologies showing a relationship of the plurality of management objects, which are required upon expanding the event propagation model, by referring to the number of related instruments-management table, and determines which event among the plurality of events having an equal event importance is to be preferentially expanded based on the estimated result.
